# FASCICULE DE BREVET EUROPEEN

(11) **EP 4 155 068 B1**
(45) Date de publication et mention de la délivrance du brevet: **19.02.2025**
(21) Numéro de dépôt: 22197191.4
(22) Date de dépôt: 22.09.2022
(51) Int. Cl.: B32B 1/08, B32B 27/08, B32B 27/22, B32B 27/30, B32B 27/32, B32B 27/34

(54) **STRUCTURE TUBULAIRE MULTICOUCHE PRESENTANT UN FAIBLE TAUX D'EXTRACTIBLES POUR LE TRANSPORT DE L'HYDROGENE**
MEHRSCHICHTIGE ROHRFÖRMIGE STRUKTUR MIT GERINGEM EXTRAHIERBAREM ANTEIL FÜR WASSERSTOFFTRANSPORT
MULTILAYER TUBULAR STRUCTURE HAVING A LOW EXTRACTABLE CONTENT FOR HYDROGEN TRANSPORT

(30) Priorité: 27.09.2021 FR 2110144
(43) Date de publication de la demande: 29.03.2023
(73) Titulaire: ARKEMA FRANCE, 92700 Colombes (FR)
(72) Inventeur: DUFAURE, Nicolas, 27470 SERQUIGNY (FR); NIZEYIMANA, Fidèle, 27470 SERQUIGNY (FR); GOUPIL, Antoine, 150874 SEOUL (KR); PRENVEILLE, Thomas, 27470 SERQUIGNY (FR)
(74) Mandataire: Bandpay & Greuter

(56) Documents cités:
- EP-A2- 1 704 996
- WO-A1-2017/121961
- WO-A1-2021/209718
- FR-A1- 2 906 861

## Description

L'invention porte sur une structure tubulaire multicouche présentant un faible taux d'extractibles et son utilisation pour transporter de l'hydrogène.

L'invention porte plus particulièrement sur les tubes présents au sein d'un véhicule automobile. Ces tubes peuvent par exemple être destinés au transport de l'hydrogène pour alimenter une pile à combustible.

### [Technique antérieure]

L'hydrogène représente un sujet qui attire actuellement beaucoup d'intérêt de la part de nombreux industriels, notamment dans le domaine automobile. L'un des buts recherché est de proposer des véhicules de moins en moins polluants. Ainsi, les véhicules électriques ou hybrides comportant une batterie visent à remplacer progressivement les véhicules thermiques, tels que les véhicules à essence ou bien à gasoil. Or, il s'avère que la batterie est un constituant du véhicule relativement complexe. Selon l'emplacement de la batterie dans le véhicule, il peut être nécessaire de la protéger des chocs et de l'environnement extérieur, qui peut être à des températures extrêmes et à une humidité variable. Il est également nécessaire d'éviter tout risque de flammes.

De plus, il est important que sa température de fonctionnement n'excède pas 55°C pour ne pas détériorer les cellules de la batterie et préserver sa durée de vie. A l'inverse, par exemple en hiver, il peut être nécessaire d'élever la température de la batterie de manière à optimiser son fonctionnement.

Par ailleurs, le véhicule électrique souffre encore aujourd'hui de plusieurs problèmes à savoir l'autonomie de la batterie, l'utilisation dans ces batteries de terre rares dont les ressources ne sont pas inépuisables, des temps de recharge beaucoup plus long que les durées de remplissage de réservoir, ainsi qu'un problème de production d'électricité dans les différents pays pour pouvoir recharger les batteries.

L'hydrogène représente donc une alternative à la batterie électrique puisque l'hydrogène peut être transformé en électricité au moyen d'une pile à combustible et alimenter ainsi les véhicules électriques.

L'alimentation en hydrogène de la pile à combustible nécessite donc la présence aussi bien d'un réservoir de stockage de l'hydrogène dans le véhicule qu'un tuyau de transport de l'hydrogène du réservoir vers le pile à combustible.

Les réservoirs à hydrogène ou tuyaux de transport de l'hydrogène sont généralement constitués d'une enveloppe (liner ou couche d'étanchéité) métallique ou thermoplastique qui doit empêcher la perméation de l'hydrogène.

Leur principe de base est de séparer les deux fonctions essentielles que sont l'étanchéité et la tenue mécanique pour les gérer l'une indépendamment de l'autre. Dans ce type de réservoir on associe liner (ou gaine d'étanchéité) en résine thermoplastique à une structure de renforcement constituée de fibres (verre, aramide, carbone) encore dénommée gaine ou couche de renfort qui permettent de travailler à des pressions beaucoup plus élevées tout en réduisant la masse et en évitant les risques de rupture explosive en cas d'agressions externes sévères.

Le tuyau de transport d'hydrogène doit limiter au maximum la perméation de l'hydrogène.

Ils doivent présenter une faible perméabilité à l'hydrogène, la perméabilité du tuyau est en effet un facteur clé pour limiter les pertes d'hydrogène du tuyau ;

De bonnes propriétés mécaniques (fatigue) à basses températures (-40 à -60°C) ;

Une tenue thermique à 85°C.

Néanmoins, la pile à combustible est très sensible à différents contaminants qui dégradent sa performance et sa durabilité.

Ces contaminants peuvent provenir de plusieurs sources :
de l'hydrogène lui-même en raison de son procédé de fabrication,
de la fabrication du réservoir et/ou du tuyau de transport d'hydrogène où différents constituants naturels tels que des composés organiques volatils ou de l'eau se retrouvent piégés notamment dans le polymère thermoplastique de la couche d'étanchéité, et qui seront par la suite extraits par l'hydrogène au contact de la dite couche d'étanchéité,
de la présence dans le polymère thermoplastique de constituants qui sont susceptible d'être extraits par la suite par l'hydrogène au contact de la dite couche d'étanchéité.

Selon Chen et al. (A review of PEM hydrogen fuel cell contamination: impact, mechanisms and mitigation, Journal of Power Sources, 165 (2007), 739-756), l'hydrogène utilisé comme combustible dans les piles à combustible en recherche, développement et démonstrateur provient principalement de sources commercialement disponibles. Les procédés de production de l'hydrogène se font principalement par reformage à partir d'hydrocarbures ou d'hydrocarbures oxygénés, incluant le méthane du gaz naturel et le méthanol de la biomasse, mais aussi par électrolyse, oxydation partielle de petites molécules organiques et hydrolyse du borohydrure de sodium.

Par conséquent, un tuyau de transport d'hydrogène utilisé avec une pile à combustible doit non seulement présenter les caractéristiques de base énumérées ci-dessus mais encore l'hydrogène après contact avec la couche d'étanchéité dudit réservoir et/ou tuyau ne doit contenir qu'un minimum de contaminants extraits de ladite couche d'étanchéité.

FR 2 906 861 A1 divulgue une canalisation multicouche utilisable pour le transport de carburant ou de combustible et plus particulièrement de l'hydrogène alimentant une pile à combustible, ladite canalisation comprenant dans l'ordre une couche interne en polyamide, une première couche intermédiaire en polymère fluoré, une deuxième couche intermédiaire en éthylène vinyle alcool, une troisième couche intermédiaire en polyamide et une couche externe en polyphthalamide ou polyphthalate.

Cette double problématique est résolue par la fourniture d'une structure multicouche de la présente invention destinée au transport de l'hydrogène.

La présente invention concerne une structure tubulaire multicouche (MLT) destinée au transport de l'hydrogène tel que définie dans la revendication 1. Cette structure MLT comprend de l'extérieur vers l'intérieur au moins une couche barrière (1) et au moins une couche intérieure (2) situé au-dessous de la couche barrière,
ladite couche intérieure (2) ou l'ensemble des couches (2) et des autres couches éventuelles situées au-dessous de la couche barrière, contenant en moyenne de 0 à 1,5% en poids de plastifiant par rapport respectivement au poids total de la composition de la couche (2) ou au poids total de l'ensemble des compositions des couches (2) et des autres couches éventuelles situées au-dessous de la couche barrière,
ladite couche intérieure (2) présentant un taux d'extractible déterminé selon la norme CSA/ ANSI CHMC 2:19 inférieur ou égal à 3% en poids, er particulier inférieure à 2% en poids de la somme des constituants de ladite composition,
ladite couche intérieure (2) comprenant majoritairement au moins un polyamide de type aliphatique ou constitué de plus de 75% de motifs aliphatiques, ledit polyamide aliphatique étant choisi parmi :
   - un polyamide noté A présentant un nombre moyen d'atomes de carbone par atome d'azote noté C_{A} compris de 4 à 8,5, avantageusement de 4 à 7 ;
   - un polyamide noté B et un nombre moyen d'atomes de carbone par atome d'azote noté C_{B} compris de 7 à 10, avantageusement de 7,5 à 9,5 ;
   - un polyamide noté C présentant un nombre moyen d'atomes de carbone par atome d'azote noté C_{C} compris de 9 à 18, avantageusement de 10 à 18;
sous réserve que lorsque ladite couche intérieure (2) comprend au moins trois polyamides, l'un au moins desdits polyamides A, B ou C est exclu.

On ne sortirait pas du cadre de l'invention si l'objet destiné au transport de l'hydrogène servait également pour le stockage de l'hydrogène.

L'expression « l'ensemble des couches (2) et des autres couches éventuelles situées au-dessous de la couche barrière » signifie toutes les couches présentes situées au-dessous de la couche barrière.

Les inventeurs ont donc trouvé que l'absence ou du moins une très faible proportion de plastifiant dans la ou les couches intérieures, c'est-à-dire située(s) sous la couche barrière permettait de diminuer fortement la proportion de contaminants présents dans l'hydrogène et extraits de ladite couche intérieure (2) après contact de l'hydrogène avec celle-ci, et la proportion totale desdits contaminants extraits dans l'hydrogène, étant inférieure ou égale à 3% en poids, en particulier inférieure à 2% en poids de la somme des constituants de ladite composition.

Le taux d'extractibles est déterminé selon la norme CSA/ANSI CHMC 2 :19.

Les structures multicouches de l'invention présentent donc une bonne perméabilité à l'hydrogène et une faible extraction des composés organiques volatils (COV).

L'expression « ladite couche intérieure (2) satisfaisant un test de contaminants présents dans l'hydrogène et extraits de ladite couche intérieure (2) par l'hydrogène » signifie que la proportion de contaminants présent dans l'hydrogène et issus de la couche intérieure (2) après contact avec l'hydrogène, qu'il s'agisse d'un réservoir ou d'un tuyau ne dépasse pas les valeurs limites empêchant le bon fonctionnement de la pile à combustible.

La norme CSA/ANSI CHMC 2 :19 donne des détails sur la procédure utilisée pour déterminer les composants volatils dans l'espace de tête d'un polymère lors d'une exposition à l'hydrogène pendant le service.

L'expression « après contact de l'hydrogène avec celle-ci » signifie tout comme ci-dessus une exposition à l'hydrogène pendant le service.

### Appareillage

L'équipement d'essai doit comprendre les éléments suivants:
a) un cryofocus pour pré-concentrer les échantillons de gaz;
b) un chromatographe en phase gazeuse utilisant une colonne appropriée, connectée en série avec un détecteur sélectif de masse approprié;
c) flacons d'espace de tête (40 ml), septums, fermetures d'anneaux et scellant pour flacon;
d) une balance analytique pouvant peser jusqu'à 60,0001 g; et
e) un four à convection capable de maintenir une température de 70 ± 5 ° C.

### Environnement de test

### Pureté de l'hydrogène gazeux

L'hydrogène gazeux de conditionnement doit être de composition et de pureté connues, comme décrit ci-dessous.

La pureté de l'hydrogène gazeux utilisé pour remplir la chambre d'essai doit être, au minimum, conforme à la norme ISO 14687 :2019, parties 1 à 3, ou SAE J2719 (2015). ISO 14687-2 définit la spécification de qualité de l'hydrogène la plus stricte, avec les valeurs de seuil les plus basses pour chaque impureté parmi ces normes ISO (voir tableaux 1). SAE J2719 s'applique également aux véhicules à pile à combustible à membrane échangeuse de protons (PEM) et est harmonisée avec ISO 14687-2.

**[Tableaux 1]**

| **Caractéristiques** | | **Limite** | |
|---|---|---|---|
| Index de combustible | Fraction Minimum en mole | 99,97% | |
| Total gaz non-hydrogène | - | 300 | |

| **Concentration Maximum des contaminants individuels** | | | |
|---|---|---|---|
| Eau | H2O | 5 | |
| Total hydrocarbure | Base CH4 | 2 | |
| Méthane | CH4 | 100 | |
| Oxygène | O2 | 5 | |
| Hélium | He | 300 | |
| Total azote et argon | N2, Ar | 300 | |
| Dioxide de carbone | CO2 | 2 | |
| Total monoxide de carbone, formaldehyde, et acide formique | Σ CO + CH₂O + CH₂O₂ | 0,2 | |
| Monoxide de carbone | CO | 0,2 | |
| Formaldéhyde | CH2O | 0,2 | |
| Acide formique | CH2O2 | 0,2 | |
| Total composés sulfurés | Base H2S | 0,004 | |
| Ammoniac | NH3 | 0,1 | |
| Total composés halogénés | - | 0,05 | |
| Concentration maximum en particules (liquide and solide) | - | 1 mg/kg | |

| | | | |
|---|---|---|---|
| * toutes les valeurs sont données en ppm (v/v) sauf précision contraire | | | |

### Mesure et instrumentation

La température à laquelle les mesures de la vitesse de transmission de l'hydrogène sont effectuées doit être contrôlée à ± 1 ° C près. La pression d'essai doit rester constante à 1% près de la valeur d'essai.

### Procédure d'essai

La procédure d'essai est décrite dans la norme ISO 14687 :2019 au paragraphe 5.6.

### S'agissant des contaminants

Le terme contaminant s'entend au sens large du terme à partir du moment où ledit contaminant est extrait de ladite couche d'étanchéité par l'hydrogène et n'est pas déjà présent dans l'hydrogène qui est introduit dans ladite structure multicouche pour faire fonctionner la pile à combustible du véhicule, par exemple en raison du procédé d'obtention de l'hydrogène.

Par exemple, le terme contaminant recouvre les cations métalliques tels que K⁺, Cu²⁺, Ni²⁺ et Fe³⁺ qui peuvent être produits par les stabilisants utilisés dans les polyamides, les stabilisants organiques ou métalliques en tant que tels, les plastifiants, les oligomères, en particulier le caprolactame et son dimère cyclique le 1,8-diazacyclotetradecane-2,7-dione (DCDD), les composés organiques volatils tels que NH3, NOx, SOx, N2, les composés benzoiques, O3, l'eau absorbée par le polyamide après fabrication de la couche d'étanchéité, les corps gras tels que de l'huile.

Les composés organiques volatils excluent donc tous les autres matériaux cités dans la liste ci-dessus.

La proportion totale desdits contaminants extraits dans l'hydrogène, est inférieure ou égale à 3% en poids, en particulier inférieure à 2% en poids de la somme des constituants de ladite composition. Par conséquent, cette proportion totale desdits contaminants extraits ne prend pas en compte la proportion de contaminants qui proviendrait du procédé de préparation de l'hydrogène ou de tout autre source.

Avantageusement, la proportion totale desdits contaminants extraits dans l'hydrogène, est comprise de 0,01% à 3%, en particulier de 0,01% à 2%, plus particulièrement de 0,01% à 1%, notamment de 0,01% à 0,5% en poids.

Dans une première variante, les contaminants extraits sont choisis parmi les plastifiants, les stabilisants, les oligomères, de l'eau, un corps gras, des composés organiques volatils et un mélange de ceux-ci.

Avantageusement, dans cette première variante, la proportion en poids de chaque contaminant individuel extrait est inférieure ou égale à 1%.

Dans un mode de réalisation de cette première variante, la constitution des contaminants extraits est la suivante :
jusqu'à 1% de plastifiants,
jusqu'à 0,5% de stabilisants,
jusqu'à 1% d'oligomères,
jusqu'à 0,5% d'eau,
jusqu'à 0,5% de corps gras, et
jusqu'à 0,5% de composés organiques volatils,
la somme des contaminants extraits étant inférieure ou égale à 3%, en particulier inférieure à 2% en poids de la somme des constituants de ladite composition.

Avantageusement, dans ce mode de réalisation de cette première variante, la proportion totale desdits contaminants extraits dans l'hydrogène, est comprise de 0,01% à 3%, en particulier de 0,01% à 2%, plus particulièrement de 0,01% à 1%, notamment de 0,01% à 0,5% en poids.

Plus avantageusement, dans ce mode de réalisation de cette première variante, la proportion en poids de chaque contaminant individuel extrait est inférieure ou égale à 1%.

Dans une seconde variante, les contaminants extraits sont choisis parmi les stabilisants, de l'eau, de l'huile, des composés organiques volatils et un mélange de ceux-ci.

Avantageusement, dans cette seconde variante, la proportion en poids de chaque contaminant individuel extrait est inférieure ou égale à 0,5%.

Dans un mode de réalisation de cette seconde variante, la constitution des contaminants extraits est la suivante :
jusqu'à 0,5% de stabilisants,
jusqu'à 0,5% d'eau,
jusqu'à 0,5% de corps gras, et
jusqu'à 0,5% de composés organiques volatils,
la somme des contaminants étant inférieure ou égale à 2% en poids de la somme des constituants de ladite composition.

Avantageusement, dans ce mode de réalisation de cette seconde variante, la proportion totale desdits contaminants extraits dans l'hydrogène, est comprise de 0,01% à 2%, plus particulièrement de 0,01% à 1%, notamment de 0,01% à 0,5% en poids.

Plus avantageusement, dans ce mode de réalisation de cette seconde variante, la proportion en poids de chaque contaminant individuel extrait est inférieure ou égale à 0,5%.

### S'agissant de la couche barrière

L'expression « couche barrière » désigne une couche ayant des caractéristiques de faible perméabilité et de bonne tenue à l'hydrogène c'est-à-dire que la couche barrière ralentit le passage de l'hydrogène, dans les autres couches de la structure ou même à l'extérieure de la structure.

La couche barrière est donc une couche permettant avant tout de ne pas trop perdre d'hydrogène dans l'atmosphère par diffusion, permettant ainsi d'éviter des problèmes d'explosion et d'inflammation.

Avantageusement, la couche barrière (1) est étanche à l'hydrogène à 23°C, c'est-à-dire que la perméabilité à l'hydrogène à 23°C est inférieure à 100 cc.mm/m2.24h.atm à 23°C sous 0% d'humidité relative (RH).

La perméabilité peut également être exprimée en (cc.mm/m².24h.Pa).

La perméabilité doit alors être multipliée par 101325.

Ces matériaux barrières peuvent être des polyamides faiblement carbonés, c'est-à-dire dont le nombre moyen d'atomes de carbone (C) par rapport à l'atome d'azote (N) est inférieur à 9, de préférence semi-cristallins et de haut point du fusion, des polyphtalamides (PPA) et/ou aussi des matériaux barrières non polyamides tels que des polymères très cristallins tels que le copolymère d'éthylène et d'alcool vinylique (noté EVOH ci-après), voire même des matériaux fluorés fonctionnalisés tels que le polyfluorure de vinylidène (PVDF) fonctionnalisé, le copolymère d'éthylène et de tétrafluoroéthylène (ETFE) fonctionnalisé, le copolymère d'éthylène, de tétrafluoroéthylène et d'hexafluoro-propylène (EFEP) fonctionnalisé, le polysulfure de phénylène (PPS) fonctionnalisé, le polynaphtalate de butylène (PBN) fonctionnalisé. Si ces polymères ne sont pas fonctionnalisés, alors on peut ajouter une couche intermédiaire de liant pour assurer une bonne adhésion au sein de la structure MLT.

Dans un mode de réalisation, ladite couche barrière (1) ladite couche barrière est choisie parmi une couche en EVOH, une couche en fluoropolymère, notamment en PVDF et une couche en PPA.

Parmi ces matériaux barrière, les EVOH sont particulièrement intéressants, notamment les plus riches en comonomère alcool vivnylique ainsi que ceux modifiés chocs car ils permettent de réaliser des structures moins fragiles.

Dans un autre mode de réalisation, la présente invention concerne une structure tubulaire multicouche (MLT) telle que définie ci-dessus, dans laquelle la couche barrière (1) est une couche en EVOH.

Dans un autre mode de réalisation, la présente invention concerne une structure tubulaire multicouche (MLT) telle que définie ci-dessus, dans laquelle l'EVOH est un EVOH comprenant jusqu'à 27% d'éthylène.

Dans un autre mode de réalisation, la présente invention concerne une structure tubulaire multicouche (MLT) telle que définie ci-dessus, dans laquelle l'EVOH est un EVOH comprenant un modifiant choc.

Dans un autre mode de réalisation, la présente invention concerne une structure tubulaire multicouche (MLT) telle que définie ci-dessus, dans laquelle la couche barrière (1) est une couche en polyphtalamide (PPA).

Le terme PPA signifie une composition à base majoritairement d'un polyamide comprenant une majorité de motifs qui comportent au moins un monomère aromatique, en particulier polyphtalamide de type copolyamide 6.T/x (ou x désigne un ou plusieurs comonomoères) tels les Zytel HTN de la société Dupont, tels les Grivory HT de la société Ems, tels les Amodel de la société Solvay, tels les Genestar de la socité Kuraray, tel les compositions PPA à base de coPA6T/6I, coPA6T/66, coPA6T/6, de coPA6T/6I/66, de PPA9T, de coPPA9T/x, de PPA10T, de coPPA10T/x.

### S'agissant des polyamides

Selon la présente demande, le terme "polyamide", également noté PA, vise :
- les homopolymères,
- les copolymères, ou copolyamides, à base de différents motifs amide, tel par exemple le copolyamide 6/12 avec des motifs amide dérivés du lactame-6 et du lactame-12,
- les alliages de polyamides, dès lors que le polyamide est le constituant majoritaire.

Il existe aussi une catégorie de copolyamides au sens large, qui bien que non préférée, fait partie du cadre de l'invention. Il s'agit des copolyamides comprenant non seulement des motifs amides (qui seront majoritaires, d'où le fait qu'ils soient à considérer comme des copolyamides au sens large), mais aussi des motifs de nature non amide, par exemple des motifs éthers. Les exemples les plus connus sont les PEBA ou polyéther-bloc-amide, et leurs variantes copolyamide-ester-éther, copolyamide-éther, copolyamide ester. Parmi ceux-ci, citons le PEBA-12 où les motifs polyamide sont les mêmes que ceux du PA12, le PEBA-6.12 où les motifs polyamide sont les mêmes que ceux du PA6.12.

On distingue également les homopolyamides, copolyamides et alliages par leur nombre d'atomes de carbone par atome d'azote, sachant qu'il y a autant d'atomes d'azote que de groupes amides (-CO-NH-).

Un polyamide fortement carboné est un polyamide à fort taux d'atomes de carbone (C) par rapport à l'atome d'azote (N). Ce sont les polyamides avec environ au moins 9 atomes de carbone par atome d'azote, tel par exemple le polyamide-9, le polyamide-12, le polyamide-11, le polyamide-10.10 (PA10.10), le copolyamide 12/10.T, le copolyamide 11/10.T, le polyamide-12.T, le polyamide-6.12 (PA6.12). T représente l'acide téréphtalique.

La nomenclature utilisée pour définir les polyamides est décrite dans la norme ISO 1874-1:1992 "Plastiques -- Matériaux polyamides (PA) pour moulage et extrusion -- Partie 1: Désignation", notamment en page 3 (tableaux 1 et 2) et est bien connue de l'homme du métier.

Un polyamide faiblement carboné est un polyamide à faible taux d'atomes de carbone (C) par rapport à l'atome d'azote (N). Ce sont les polyamides avec environ moins de 9 atomes de carbone par atome d'azote, tel par exemple le polyamide-6, le polyamide-6.6, le polyamide-4.6, le copolyamide-6.T/6.6, le copolyamide 6.I/6.6, le copolyamide 6.T/6.I/6.6, le polyamide 9.T. I représente le diacide isophtalique.

Dans le cas d'un homopolyamide de type PA-X.Y, avec X désignant un motif obtenu à partir d'une diamine et Y désignant un motif obtenu à partir d'un diacide, le nombre d'atomes de carbone par atome d'azote est la moyenne des nombres d'atomes de carbone présents dans le motif issu de la diamine X et dans le motif issu du diacide Y. Ainsi le PA6.12 est un PA à 9 atomes de carbone par atome d'azote, autrement dit un PA en C9. Le PA6.13 est en C9.5.

Dans le cas des copolyamides, le nombre d'atomes de carbone par atome d'azote se calcule selon le même principe. Le calcul est réalisé au prorata molaire des différents motifs amides. Dans le cas d'un copolyamide ayant des motifs de type non amide, le calcul s'effectue uniquement sur la part de motifs amides. Ainsi, par exemple, le PEBA-12, qui est un copolymère bloc de motifs amide 12 et de motifs éther, le nombre moyen d'atome de carbone par atome d'azote sera 12, comme pour le PA12 ; pour le PEBA-6.12, il sera de 9, comme pour le PA6.12. Ainsi, des polyamides fortement carbonés comme le polyamide PA12 ou 11 adhèrent difficilement sur un polymère EVOH, sur un polyamide faiblement carboné comme le polyamide PA6, ou encore sur un alliage de polyamide PA6 et de polyoléfine (comme, par exemple, un Orgalloy^{®} commercialisé par la société Arkema).

### S'agissant de la couche (2)

Lorsqu'une seule couche (2) est présente, cette dernière est en contact avec l'hydrogène.

Dans le cas où plusieurs couches (2) sont présentes, il est possible qu'une des couches intérieures présente une proportion de plastifiant supérieure à 1,5% en poids mais dans ce cas, la proportion de plastifiant au-delà de 1,5% est compensée par l'épaisseur de la couche qui est alors beaucoup plus fine de manière à ce que la valeur moyenne de plastifiant présente dans l'ensemble des couches intérieures ne dépasse pas 1,5%. La proportion de plastifiant dans cette couche peut alors être jusqu'à 15% mais son épaisseur ne dépasse alors pas 10% de l'épaisseur totale du tube, de préférence elle ne dépasse pas 100µm.

Cette couche beaucoup plus fine peut être soit directement au contact de la couche barrière, soit la couche la plus intérieure qui est alors en contact avec l'hydrogène.

L'expression « ladite couche intérieure (2) comprenant majoritairement au moins un polyamide de type aliphatique» signifie que ledit polyamide de type aliphatique est présent en proportion de plus de 50% en poids dans la couche (2). Le polyamide de type aliphatique est linéaire et n'est pas de type cycloaliphatique.

Avantageusement, ledit polyamide de type aliphatique majoritaire de la ou les couches (2) comprend également majoritairement des motifs aliphatiques, à savoir plus de 50% de motifs aliphatiques.

Avantageusement, ledit polyamide de type aliphatique majoritaire de la ou les couches (2) est constitué de plus de 75% de motifs aliphatiques, de préférence ledit polyamide de type aliphatique majoritaire de la ou les couches (2) est totalement aliphatique.

Dans un mode de réalisation avantageux, ladite couche intérieure (2) ou chacune des couches (2) et des autres couches éventuelles situées au-dessous de la couche barrière, contient de 0 à 1,5% en poids de plastifiant par rapport respectivement au poids total de la composition de la couche (2) ou au poids total de chacune des compositions des couches (2) et des autres couches éventuelles situées au-dessous de la couche barrière.

Dans un mode de réalisation avantageux, dans la structure tubulaire multicouche (MLT) telle que définie ci-dessus, ladite couche intérieure (2) ou chacune des couches (2) et des autres couches éventuelles situées au-dessous de la couche barrière est(sont) dépourvue(s) de plastifiant.

Dans ce mode de réalisation toutes les couches situées sous la couche barrière sont totalement dépourvue de plastifiant et constitué l'une des structures préférées de l'invention.

Dans un mode de réalisation, le PA12 est exclu de la définition du polyamide C de la couche (2) ou des couches (2) présentes.

Avantageusement, dans la structure tubulaire multicouche (MLT) telle que définie ci-dessus, le polyamide de la couche intérieure (2) est une composition à base d'un polyamide choisi parmi A, B ou C tels que définis ci-dessus, en particulier PA6, PA66, PA6/66, PA11, PA610, PA612, PA1012, les copolyamides correspondants et les mélanges desdits polyamides ou copolyamides, les polyamides obtenus à partir d'un lactame étant avantageusement lavés, et le polyamide de la couche extérieure (3) est un polyamide choisi parmi B ou C tels que définis ci-dessus, en particulier PA 11, PA12, PA610, PA612, PA1012, les copolyamides correspondants et les mélanges desdits polyamides ou copolyamides, les polyamides obtenus à partir d'un lactame étant avantageusement lavés.

Dans un autre mode de réalisation, la présente invention concerne une structure tubulaire multicouche (MLT) telle que définie ci-dessous, dans laquelle le polyamide de la couche intérieure (2) ou de l'une au moins des autres couches (2) est un polyamide conducteur.

Lorsque la structure tubulaire de l'invention comprend plusieurs couches (2), la couche conductrice est celle qui est le plus en interne, c'est-à-dire en contact avec l'hydrogène.

Avantageusement, dans la structure tubulaire multicouche (MLT) telle que définie ci- dessus, le polyamide de la couche intérieure (2) est une composition à base d'un polyamide choisi parmi A, B ou C tels que définis ci-dessus, en particulier PA6, PA66, PA6/66, PA11, PA610, PA612, PA1012, les copolyamides correspondants et les mélanges desdits polyamides ou copolyamides, les polyamides obtenus à partir d'un lactame étant avantageusement lavés.

### S'agissant de la couche (3)

La présente invention concerne une structure tubulaire multicouche (MLT) telle que définie ci-dessus, dans laquelle au moins une couche plus extérieure (3) située au-dessus de la couche barrière est présente, la dite couche extérieure (3) comprenant majoritairement au moins un polyamide de type aliphatique ou constitué de plus de 75% de motifs aliphatiques, en particulier ledit polyamide aliphatique présentant un nombre moyen d'atomes de carbone par atome d'azote compris 9,5 à 18, avantageusement de 11 à 18.

L'expression « ladite couche extérieure (3) comprenant majoritairement au moins un polyamide de type aliphatique» signifie que ledit polyamide de type aliphatique est présent en proportion de plus de 50% en poids dans la couche (3). Le polyamide de type aliphatique est linéaire et n'est pas de type cycloaliphatique.

Avantageusement, ledit polyamide de type aliphatique majoritaire de la ou les couches (3) comprend également majoritairement des motifs aliphatiques, à savoir plus de 50% de motifs aliphatiques.

Avantageusement, ledit polyamide de type aliphatique majoritaire de la ou les couches (3) est constitué de plus de 75% de motifs aliphatiques, de préférence ledit polyamide de type aliphatique majoritaire de la ou les couches (3) est totalement aliphatique.

Avantageusement, ledit polyamide de type aliphatique majoritaire de la ou les couches (2) et de la ou les couches (3) comprend également majoritairement des motifs aliphatiques, à savoir plus de 50% de motifs aliphatiques.

Avantageusement, ledit polyamide de type aliphatique majoritaire de la ou les couches (2) et de la ou les couches (3) est constitué de plus de 75% de motifs aliphatiques, de préférence ledit polyamide de type aliphatique majoritaire de la ou les couches (2) et de la ou les couches (3) est totalement aliphatique.

Avantageusement, la présente invention concerne une structure tubulaire multicouche (MLT) telle que définie ci-dessus, dans laquelle ladite couche extérieure (3) comprend de 0 à 15% de plastifiant par rapport au poids total de la composition de la couche (3), ou dans laquelle l'ensemble des couches extérieures comprennent en moyenne de 0 à 5% de plastifiant.

Il est possible d'avoir une proportion de plastifiant plus importante dans la ou les couches extérieures, c'est-à-dire la ou les couches situées au-dessus de la couche barrière sans pour autant augmenter significativement la proportion d'extractibles.

Comme déjà indiqué ci-dessus pour les couches (2), dans le cas où plusieurs couches (3) sont présentes, il est possible qu'une des couches extérieures présente une proportion de plastifiant importante telle que à 15% en poids mais dans ce cas, la proportion de plastifiant est compensée par l'épaisseur de la couche qui est alors beaucoup plus fine de manière à ce que la valeur moyenne de plastifiant présente dans l'ensemble des couches intérieures ne dépasse pas 5%. La proportion de plastifiant dans cette couche peut alors être jusqu'à 15% mais son épaisseur ne dépasse pas 20% de l'épaisseur totale du tube, de préférence elle ne dépasse pas 200µm.

### S'agissant de la couche (3')

La présente invention concerne une structure tubulaire multicouche (MLT) comprenant une couche (3) telle que définie ci-dessus, dans laquelle au moins une deuxième couche extérieure (3') située au-dessus de la couche barrière est présente, et de préférence située au-dessus de la couche (3), ladite couche (3') étant plastifiée, ledit plastifiant étant en particulier présent en une proportion de 1,5% à 15% en poids par rapport au poids total de la composition de ladite couche, l'épaisseur de ladite couche (3') représente de préférence jusqu'à 20% de l'épaisseur totale de la structure tubulaire, en particulier jusqu'à 200µm.

La couche (3') comprend tout comme la couche (3) majoritairement un polyamide type aliphatique c'est-à-dire que ledit polyamide de type aliphatique est présent en proportion de plus de 50% en poids dans la couche (3'). Le polyamide de type aliphatique est linéaire et n'est pas de type cycloaliphatique.

Avantageusement, ledit polyamide de type aliphatique majoritaire de la ou les couches (3') comprend également majoritairement des motifs aliphatiques, à savoir plus de 50% de motifs aliphatiques.

Avantageusement, ledit polyamide de type aliphatique majoritaire de la ou les couches (3') est constitué de plus de 75% de motifs aliphatiques, de préférence ledit polyamide de type aliphatique majoritaire de la ou les couches (3') est totalement aliphatique.

Dans un autre mode de réalisation, la présente invention concerne une structure tubulaire multicouche (MLT), dans laquelle la (ou les) couche(s) (3) comprend(comprennent) jusqu'à 1,5% en poids de plastifiant, par rapport au poids total de la composition de ladite couche ou de l'ensemble des compositions des couches (3).

Avantageusement, la structure tubulaire multicouche (MLT) comprend une seule couche (3) et est dépourvue de plastifiant.

Avantageusement, la structure tubulaire multicouche (MLT) comprend une seule couche (3) et une seule couche (2), les couches (2) et (3) étant dépourvues de plastifiant.

Dans un autre mode de réalisation, la présente invention concerne une structure tubulaire multicouche (MLT), dans laquelle le taux de plastifiant de toutes les couches situées au-dessus de la couche barrière est au maximum de 5% en poids par rapport au poids total des compositions de toutes les couches situées au-dessus de la couche barrière.

Dans un autre mode de réalisation, la présente invention concerne une structure tubulaire multicouche (MLT), dans laquelle la couche (3') est la plus extérieure et est la seule plastifiée, la (ou les) couche(s) (3) étant dépourvue(s) de plastifiant.

La proportion de plastifiant peut représenter jusqu'à 15% en poids du poids total de la composition de la couche (3'). Plus la proportion de plastifiant est importante et plus la couche (3') sera fine avec une épaisseur de ladite couche (3') qui représente de préférence jusqu'à 20% de l'épaisseur totale de la structure tubulaire, en particulier jusqu'à 200µm.

Avantageusement, la structure tubulaire multicouche (MLT) est constituée de quatre couches, de l'extérieur vers l'intérieur (3')//(3)//(1)//(2), la couche (3') étant la seule plastifiée dans des proportions telles que définies ci-dessus, la couche (3) et la couche (2) étant dépourvues de plastifiant.

Une structure tubulaire multicouche (MLT) constituée de quatre couches de l'extérieur vers l'intérieur (3')//(3)//(1)//(2) présente l'avantage d'avoir un allongement à la rupture à t = 0 lorsque la structure est très sèche avec un taux d'humidité très bas compris de 0 et 30% d'humidité relative, qui est très bon et notamment meilleur qu'une structure dont les couches (3'), (3) et (2) sont dépourvues de plastifiant.

Avantageusement, dans ce dernier mode de réalisation, la couche (3') est la plus extérieure et le polyamide de cette dernière est un polyamide à longue chaîne, soit un nombre moyen d'atomes de carbone par atome d'azote noté Cc compris de 9,5 à 18, la couche (3) est située entre la couche barrière et la couche (3') et le polyamide de cette couche (3) est un polyamide à chaîne courte, soit un nombre moyen d'atomes de carbone par atome d'azote noté Ca compris de 4 à 9.

Avantageusement, dans ce dernier mode de réalisation, la couche (3') à une épaisseur comprise de 100 à 200µm, la couche (3) présente une épaisseur, d'au moins 200 µm, la couche (1) présente une épaisseur comprise de 100 à 200µm.

Avantageusement, dans ce dernier mode de réalisation, la couche (3') est la plus extérieure et le polyamide de cette dernière est un polyamide à longue chaîne, soit un nombre moyen d'atomes de carbone par atome d'azote noté Cc compris de 9,5 à 18, la couche (3) est située entre la couche barrière et la couche (3') et le polyamide de cette couche (3) est un polyamide à chaîne courte, soit un nombre moyen d'atomes de carbone par atome d'azote noté compris de 4 à 9, la couche (3') à une épaisseur comprise de 100 à 200µm, la couche (3) présente une épaisseur d'au moins 200µm, la couche (1) présente une épaisseur comprise de 100 à 200µm. Avantageusement, la structure tubulaire multicouche (MLT) est constituée de cinq couches de l'extérieur vers l'intérieur (3')//(3)//(1)//(2)//(2'), la couche (3') étant la seule plastifiée dans des proportions telles que définies ci-dessus, la couche (3) et les couches (2) et (2') étant dépourvues de plastifiant, la couche (2') étant un polyamide tel que défini pour la couche (2) mais différent de celui de la couche (2) . Ce type de structure permet d'augmenter l'allongement à la rupture dans des conditions d'humidité très faible) dans trop rigidifier la structure.

Quel que soit le nombre de couches, trois, quatre, cinq ou plus, les structures tubulaires préférées sont celles contenant le moins possibles de plastifiant, et de préférence le moins de plastifiant dans les couches les plus internes, c'est-à-dire les plus proches du fluide. Ces structures peuvent être les suivantes :
- Structure tubulaire multicouche (MLT) ne contenant pas plus de 1,5% de plastifiant, dans les premiers 50% de son épaisseur à partir de la face interne en contact avec l'hydrogène.
- Structure tubulaire multicouche (MLT) ne contenant pas plus de 1,5% de plastifiant, dans les premiers 75% de son épaisseur à partir de la face interne en contact avec l'hydrogène.
- Structure tubulaire multicouche (MLT) ne contenant pas plus de 1,5% de plastifiant, dans les premiers 85% de son épaisseur à partir de la face interne en contact avec l'hydrogène.
- Structure tubulaire multicouche (MLT) dépourvue de plastifiant, dans les premiers 50% de son épaisseur à partir de la face interne en contact avec l'hydrogène.
- Structure tubulaire multicouche (MLT) dépourvue de plastifiant, dans les premiers 75% de son épaisseur à partir de la face interne en contact avec l'hydrogène.
- Structure tubulaire multicouche (MLT) dépourvue de plastifiant, dans les premiers 85% de son épaisseur à partir de la face interne en contact avec l'hydrogène.

### S'agissant de la couche (4) et la couche (4')

Dans un autre mode de réalisation, la présente invention concerne une structure tubulaire multicouche (MLT) telle que définie ci-dessus, dans laquelle au moins une couche (4) est présente, ladite couche (4) ne contenant pas plus de 15% en poids de plastifiant, de préférence pas plus de 1,5% en poids de plastifiant, par rapport au poids total des constituants de la couche (4), avantageusement la couche (4) est dépourvue de plastifiant, ladite couche (4) comprenant majoritairement au moins un polyamide de type aliphatique ou constitué de plus de 75% de motifs aliphatiques, ledit polyamide aliphatique étant choisi parmi :
- un polyamide noté A présentant un nombre moyen d'atomes de carbone par atome d'azote noté CA compris de 4 à 8,5, avantageusement de 4 à 7 ;
- un polyamide noté B et un nombre moyen d'atomes de carbone par atome d'azote noté CB compris de 7 à 10, avantageusement de 7,5 à 9,5 ;
- un polyamide noté C présentant un nombre moyen d'atomes de carbone par atome d'azote noté CC compris de 9 à 18, avantageusement de 10 à 18 ;

sous réserve que lorsque ladite couche (4) comprend au moins trois polyamides, l'un au moins desdits polyamides A, B ou C est exclu,
ladite couche (4) étant située entre la couche barrière (1) et la couche intérieure (2) et/ou entre la couche extérieure (3) et la couche barrière (1) ;
ou ladite couche (4) est une couche de liant dont l'épaisseur représente jusqu'à 15% de la structure (MLT).

La couche (4) lorsqu'elle n'est pas une couche de liant est un polyamide de type aliphatique tel que défini pour les couches (2), (3) et (3').

Avantageusement, la structure tubulaire de l'invention est une structure à quatre couches constituée de l'extérieur vers l'intérieur les couches suivantes : (3)//(4)//(1)//(2), la couche (3) étant plastifiée jusqu'à 15% comme ci-dessus et fine et la couche (4) lorsqu'elle est différente de la couche de liant telle que définie ci-dessus est dépourvue de plastifiant ainsi que la couche (2).

Avantageusement, la structure tubulaire de l'invention est une structure à quatre couches constituée de l'extérieur vers l'intérieur les couches suivantes : (3)//(1)//(4)//(2), la couche (3) étant plastifiée jusqu'à 15% en poids comme ci-dessus et de préférence fine et la couche (4) lorsqu'elle est différente de la couche de liant, telle que définie ci-dessus, est dépourvue de plastifiant ainsi que la couche (2).

Néanmoins, cette couche (3) plastifiée jusqu'à 15% en poids ne doit pas être trop fine sinon la couche barrière est trop peu au centre et la structure MLT risque de ne pas être assez bon en choc. Par contre elle peut être très fine s'il y a une couche supplémentaire épaisse (non plastifiée) entre la couche (3) et la couche (1), de façon à ce que la couche (1) soit pas trop décentrée.

Une autre couche (2') et/ou une couche (3') peuvent également être présentes dans ces deux types de structures à quatre couches.

La ladite couche (4) peut également être un liant tel que décrit, en particulier dans les brevets EP 1452307 et EP1162061, EP 1216826 et EP0428833.

Il est implicite que les couches (3) et (1) ou (1) et (2) adhèrent entre elles. La couche de liant est destinée à être intercalée entre deux couches qui n'adhèrent pas ou difficilement entre elles.

Le liant peut être par exemple, mais sans être limité à ceux-ci, une composition à base de 50% de copolyamide 6/12 (de ratio 70/30 en masse) de Mn 16000, et de 50% copolyamide 6/12 (de ratio 30/70 en masse) de Mn 16000, une composition à base de PP (polypropylène) greffé avec de l'anhydride maléique, connu sous le nom d'Admer QF551A de la société Mitsui, une composition à base de PA610 (de Mn 30000, et tel que défini par ailleurs) et de 36% de PA6 (de Mn 28000) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba), une composition à base de PA612 (de Mn 29000, et tel que défini par ailleurs) et de 36% de PA6 (de Mn 28000, et tel que défini par ailleurs) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba), une composition à base de PA610 (de Mn 30000, et tel que défini par ailleurs) et de 36% de PA12 (de Mn 35000, et tel que défini par ailleurs) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba), une composition à base de 40% PA6 (de Mn 28000, et tel que défini par ailleurs), de 40% de PA12 (de Mn 35000, et tel que défini par ailleurs) et de 20% d'EPR fonctionnalisé Exxelor VA1801 (société Exxon) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba) ou encore une composition à base de 40% PA6.10 (de Mn 30000, et tel que défini par ailleurs), de 40% de PA6 (de Mn 28000, et tel que défini par ailleurs) et de 20% de modifiant choc type éthylène/acrylate d'éthyle/anhydride en rapport massique 68,5/30/1,5 (MFI 6 à 190°C sous 2.16 kg), et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).

Dans un autre mode de réalisation, la présente invention concerne une structure tubulaire multicouche (MLT) telle que définie ci-dessus, dans laquelle une couche (4') est présente, ladite couche (4') comprenant majoritairement au moins un polyamide de type aliphatique ou constitué de plus de 75% de motifs aliphatiques, ledit polyamide aliphatique étant choisi parmi :
- un polyamide noté A présentant un nombre moyen d'atomes de carbone par atome d'azote noté CA compris de 4 à 8,5, avantageusement de 4 à 7 ;
- un polyamide noté B et un nombre moyen d'atomes de carbone par atome d'azote noté CB compris de 7 à 10, avantageusement de 7,5 à 9,5 ;
- un polyamide noté C présentant un nombre moyen d'atomes de carbone par atome d'azote noté CC compris de 9 à 18, avantageusement de 10 à 18 ;

sous réserve que lorsque ladite couche (4') comprend au moins trois polyamides, l'un au moins desdits polyamides A, B ou C est exclu,
ou ladite couche (4') est une couche de liant dont l'épaisseur représente jusqu'à 15% de la structure (MLT),
ledit au moins polyamide de ladite couche (4') pouvant être identique ou différent dudit polyamide de la couche (4) ;
ladite couche (4') étant située entre la couche extérieure (3) et la couche barrière (1) et ladite couche de liant (4) étant située entre la couche barrière (1) et la couche intérieure (2).

La couche (4') peut contenir ou non un plastifiant. Avantageusement, elle est dépourvue de plastifiant tout comme la couche (2) et la couche (4), la couche (3) étant plastifiée mais fine comme définie ci-dessus.

Dans un autre mode de réalisation, la présente invention concerne une structure tubulaire multicouche (MLT) telle que définie ci-dessus, dans laquelle le polyamide de la couche intérieure (2) ou le polyamide de la couche extérieure (3) est un polyamide totalement aliphatique, de préférence le polyamide de la couche intérieure (2) et le polyamide de la couche extérieure (3) sont des polyamides totalement aliphatiques.

Avantageusement, dans la structure tubulaire multicouche (MLT) telle que définie ci-dessus, le polyamide de la couche (4) et/ou (4') est un mélange d'un polyamide présentant un nombre moyen d'atomes de carbone par atome d'azote de 10 ou plus et un polyamide présentant un nombre moyen d'atomes de carbone par atome d'azote de 6 ou moins, par exemple PA12 et PA6 et une (co)polyoléfine fonctionnalisée anhydride.

Avantageusement, dans la structure tubulaire multicouche (MLT) telle que définie ci-dessus, le polyamide de la couche (4) et/ou (4') est choisi parmi les mélanges binaires : PA6 et PA12, PA6 et PA612, PA6 et PA610, PA12 et PA612, PA12 et PA610, PA1010 et PA612, PA1010 et PA610, PA1012 et PA612, PA1012 et PA610, et les mélanges ternaires : PA6, PA610 et PA12 ; PA6, PA612 et PA12 ; PA6, PA614 et PA12.

### S'agissant de la couche (5)

Dans un autre mode de réalisation, la présente invention concerne une structure tubulaire multicouche (MLT) telle que définie ci-dessus, dans laquelle une deuxième couche barrière (5) est présente, ladite deuxième couche barrière (5) étant adjacente ou non à la première couche barrière (1) et située au-dessous de ladite couche barrière (1).

Il peut être intéressant en particulier pour les essences alcoolisée, et tout particulièrement pour celle contenant du méthanol) de mettre une deuxième couche barrière pour limiter encore plus la diffusion de l'essence dans l'atmosphère et/ou pour réduire le taux d'extractible.

Cette deuxième couche barrière est différente de la première couche barrière (1).

### S'agissant de la deuxième couche barrière

Dans un autre mode de réalisation, la présente invention concerne une structure tubulaire multicouche (MLT) telle que définie ci-dessus, dans laquelle la couche barrière (1) est une couche en EVOH et la deuxième couche barrière (5) est une couche en PPA ou polymère fluoré, en particulier de type ETFE, EFEP, CPT.

Avantageusement, la couche barrière (1) est une couche en EVOH et la deuxième couche barrière (5) est une couche en PPA.

Dans un autre mode de réalisation, la présente invention concerne une structure tubulaire multicouche (MLT) telle que définie ci-dessus, dans laquelle la couche barrière (1) est une couche en EVOH et la deuxième couche barrière (5) est une couche en PPA.

Dans un autre mode de réalisation, la présente invention concerne une structure tubulaire multicouche (MLT) telle que définie ci-dessus, dans laquelle la couche barrière (1) est une couche en EVOH et la deuxième couche barrière (5) est une couche en polymère fluoré, en particulier de type ETFE, EFEP, CPT.

Avantageusement, dans la structure tubulaire multicouche (MLT) telle que définie ci-dessus, le polyamide de la couche extérieure (3) est un polyamide choisi parmi B ou C tels que définis ci-dessus, en particulier PA 11, PA12, PA610, PA612, PA1012, les copolyamides correspondants et les mélanges desdits polyamides ou copolyamides, les polyamides obtenus à partir d'un lactame étant avantageusement lavés.

### Différents modes de réalisation de structure

Dans un autre mode de réalisation, la présente invention concerne une structure tubulaire multicouche (MLT) telle que définie ci-dessus, dans laquelle au moins une des couches (2), (3), (3'), (4) et (4') comprend au moins un modifiant choc et/ou au moins un additif.

Il est bien évident que le modifiant choc ou l'additif n'est pas un plastifiant.

Avantageusement, les couches (2) et (3) comprennent au moins un modifiant choc et/ou au moins un additif.

Avantageusement, les couches (2), (3) et (3') comprennent au moins un modifiant choc et/ou au moins un additif.

Avantageusement, les couches (2), (3), (3') et (4) comprennent au moins un modifiant choc et/ou au moins un additif.

Avantageusement, les couches (2), (3), (3'), (4) et (4') comprennent au moins un modifiant choc et/ou au moins un additif.

Dans un autre mode de réalisation, la présente invention concerne une structure tubulaire multicouche (MLT) telle que définie ci-dessus, dans laquelle la structure comprend trois couches dans l'ordre suivant (3)//(1)//(2), les couches (3) et/ou (2) ne contenant pas plus de 1,5% en poids de plastifiant, par rapport au poids total de la composition de chaque couche, en particulier la couche (3) et/ou (2) est(sont) dépourvue(s) de plastifiant.

Dans un autre mode de réalisation, la présente invention concerne une structure tubulaire multicouche (MLT) telle que définie ci-dessus, dans laquelle la structure comprend quatre couches dans l'ordre suivant (3')//(3)//(1)//(2), la couche (3') étant telle que définie ci-dessus, la couche (2) et/ou (3) ne contenant pas plus de 1,5% en poids de plastifiant, par rapport au poids total de la composition de chaque couche, en particulier la couche (2) et/ou (3) est (sont) dépourvue(s) de plastifiant.

Dans un autre mode de réalisation, la présente invention concerne une structure tubulaire multicouche (MLT) telle que définie ci-dessus, dans laquelle la structure comprend cinq couches dans l'ordre suivant :
(3')//(3)//(1)//(5)//(2) dans laquelle la couche (1) est une couche d'EVOH, la couche (5) est une couche de PPA, la couche (2) ne contenant pas plus de 1,5% en poids de plastifiant, par rapport au poids total de la composition de chaque couche, en particulier la couche (2) est dépourvue de plastifiant, la couche (3) et (3') comprenant du plastifiant ; ou
(3')//(3)//(1)//( 2)//( 5) dans laquelle la couche (1) est une couche d'EVOH, la couche (5) est une couche de PPA, la couche (2) ne contenant pas plus de 1,5% en poids de plastifiant, par rapport au poids total de la composition de chaque couche, en particulier la couche (2) est dépourvue de plastifiant, la couche (3) et (3') comprenant du plastifiant ; ou
(3)//(4')//(1)//(4)//(2) dans laquelle la couche (3) est telle que définie dans la revendication 3, la couche (2) et (4) ne contenant pas plus de 1,5% en poids de plastifiant, par rapport au poids total de la composition de chaque couche, en particulier la couche (2) et/ou (4) est(sont) dépourvue(s) de plastifiant, la couche (4') comprenant du plastifiant, en particulier la couche (4') est dépourvue de plastifiant.

Selon un autre mode de réalisation, la présente invention concerne une structure tubulaire multicouche (MLT) telle que définie ci-dessus, dans laquelle la structure comprend les couches dans l'ordre suivant :
(3')//(3)//(4')//(1)//(4)//(2) dans laquelle les couches (3) et (3') sont telles que définies ci-dessus, la couche (2) et (4) ne contenant pas plus de 1,5% en poids de plastifiant, par rapport au poids total de la composition de chaque couche, en particulier la couche (2) et/ou (4) est(sont) dépourvue(s) de plastifiant, la couche (4') comprenant du plastifiant, en particulier la couche (4') est dépourvue de plastifiant.

En particulier ladite couche (3') de la structure à six couches ci-dessus est plastifiée, ledit plastifiant étant en particulier présent en une proportion de 1,5% à 15% en poids par rapport au poids total de la composition de ladite couche, l'épaisseur de ladite couche (3') représente de préférence jusqu'à 20% de l'épaisseur totale de la structure tubulaire, en particulier jusqu'à 200µm, en particulier la couche (3') est la plus extérieure et est la seule plastifiée, la (ou les) couche(s) (3) étant dépourvue(s) de plastifiant.

Selon un autre aspect, la présente invention concerne une structure multicouche telle que définie ci-dessus, caractérisée en ce qu'elle comprend un raccord en polyamide à l'une et/ou l'autre de ses extrémités, ledit raccord étant soudé à ladite structure.

Le soudage peut être effectué par exemple au moyen d'un laser.

Le polyamide est choisi parmi un polyamide aliphatique tel que défini ci-dessus et un polyamide semi-aromatique, notamment un polyamide semi-aromatique de formule X/YAr, tel que décrits dans EP1505099, notamment un polyamide semi-aromatique de formule A/XT dans laquelle A est choisi parmi un motif obtenu à partir d'un aminoacide, un motif obtenu à partir d'un lactame et un motif répondant à la formule (diamine en Ca).(diacide en Cb), avec a représentant le nombre d'atomes de carbone de la diamine et b représentant le nombre d'atome de carbone du diacide, a et b étant chacun compris entre 4 et 36, avantageusement entre 9 et 18, le motif (diamine en Ca) étant choisi parmi les diamines aliphatiques, linéaires ou ramifiés, les diamines cycloaliphatiques et les diamines alkylaromatiques et le motif (diacide en Cb) étant choisi parmi les diacides aliphatiques, linéaires ou ramifiés, les diacides cycloaliphatiques et les diacides aromatiques;

X.T désigne un motif obtenu à partir de la polycondensation d'une diamine en Cx et de l'acide téréphtalique, avec x représentant le nombre d'atomes de carbone de la diamine en Cx, x étant compris entre 5 et 36, avantageusement entre 9 et 18,notamment un polyamide de formule A/5T, A/6T, A/9T, A/10T ou A/11T, A étant tel que défini ci-dessus, en particulier un polyamide choisi parmi un PA MPMDT/6T, un PA11/10T, un PA 5T/10T, un PA 11/BACT, un PA 11/6T/10T, un PA MXDT/10T, un PA MPMDT/10T, un PA BACT/10T, un PA BACT/6T, PA BACT/10T/6T, un PA 11/BACT/6T, PA 11/MPMDT/6T, PA 11/MPMDT/10T, PA 11/BACT/10T, un PA 11/MXDT/10T, un 11/5T/10T.

T correspond à l'acide téréphtalique, MXD correspond à la m-xylylène diamine, MPMD correspond à la méthylpentaméthylène diamine et BAC correspond au bis(aminométhyl)cyclohexane.

Dans un mode de réalisation, le PA12 est exclu du polyamide aliphatique constituant ledit raccord. Dans un autre mode de réalisation, le polyamide aliphatique dudit raccord est choisi parmi PA6, PA66, PA6/66, PA11, PA610, PA612, PA1012, notamment le PA11.

Dans un mode de réalisation, ledit raccord est constitué d'une composition en polyamide tel que défini ci-dessus, ladite composition étant une composition chargée en fibres.

Dans un mode de réalisation, les fibres sont d'origine minérale, organique ou végétale.

Parmi les fibres d'origine minérale, on peut citer les fibres de carbone, les fibres de verre, les fibres de basalte ou à base de basalte, les fibres de silice, ou les fibres de carbure de silicium par exemple. Parmi les fibres d'origine organique, on peut citer les fibres à base de polymère thermoplastique ou thermodurcissable, telles que des fibres de polyamides semi-aromatiques, des fibres d'aramide ou des fibres en polyoléfines par exemple.

Avantageusement les fibres sont des fibres de verre et/ou de carbone.

Selon un autre aspect, la présente invention concerne l'utilisation d'une structure tubulaire multicouche MLT, telle que définie ci-dessus, pour le transport de l'hydrogène.

### EXEMPLES

L'invention va maintenant être décrite plus en détail à l'aide des exemples suivants qui ne sont pas limitatifs.

Les compositions suivantes ont été préparées selon les techniques bien connues de l'homme du métier pour la constitution de la couche intérieure (2) des structures de l'invention (tableau 1).

**[Tableau 1]**

| Composition | I1 | I2 | I3 | I4 | I5 | C1 | C2 |
|---|---|---|---|---|---|---|---|
| PA11 | 100% | | 99,7% | 90% | 89,7% | 86% | |
| PA11/10T | | 70% | | | | | 65% |
| Plastifiant | 0 | 0% | 0 | 0 | 0 | 13% | 10% |
| Modifiant choc | 0% | 30% | 0% | 10% | 10% | 0% | 35% |
| additifs | 0% | 0% | 0,3% | 0% | 0,3% | 0% | 0% |

| | | | | | | | |
|---|---|---|---|---|---|---|---|
| I1 à I2 : compositions de l'invention C1 à C2 : compositions comparatives PA11 : Le PA11 est un polyamide 11 de Mn (masse moléculaire en nombre) 45000. La température de fusion est de 190°C, son enthalpie de fusion est 56 J/g. PA11/10T : Rilsan HT (Arkema) Plastifiant : BBSA (n-butyl benzène sulfonamide) Modifiant choc : lotader^{®} 4700 (50%) + lotader^{®} AX8900 (25%) + lucalène^{®} 3110 (25%) Additifs : stabilisants | | | | | | | |

Les structures suivantes ont été ont été préparées par extrusion :
Les tubes multicouches sont réalisés par coextrusion. On utilise une ligne industrielle d'extrusion multicouche McNeil, équipée de 5 extrudeuses, connectées à une tête d'extrusion multicouche à mandrins spiralés.

Les vis utilisées sont des monovis d'extrusion ayant des profils de vis adaptés aux polyamides. En plus, des 5 extrudeuses et de la tête d'extrusion multicouche, la ligne d'extrusion comporte :
- un ensemble filière-poinçon, situé en bout de tête de coextrusion ; le diamètre intérieur de la filière et le diamètre extérieur du poinçon sont choisis en fonction de la structure à réaliser et des matériaux qui la composent, ainsi que des dimensions du tube et de la vitesse de ligne ;
- un bac à vide avec un niveau de dépression réglable. Dans ce bac circule de l'eau maintenue à 20°C en général, dans laquelle est plongé un calibre permettant de conformer le tube dans ses dimensions finales. Le diamètre du calibre est adapté aux dimensions du tube à réaliser, typiquement de 8,5 à 10 mm pour un tube de diamètre externe de 8 mm et d'épaisseur de 1 mm ;
- une succession de bacs de refroidissement dans lesquels de l'eau est maintenue vers 20°C, permettant de refroidir le tube le long de parcours de la tête au banc de tirage ;
- un mesureur de diamètre ;
- un banc de tirage.

La configuration à 5 extrudeuses est utilisée pour réaliser les tubes allant de 2 couches à 5 couches. Dans le cas des structures dont le nombre de couches est inférieur à 5, plusieurs extrudeuses sont alors alimentées avec la même matière.

Dans le cas des structures comportant 6 couches, une extrudeuse supplémentaire est connectée et un mandrin spiralé est ajouté à la tête existante, en vue de réaliser la couche interne, en contact avec l'hydrogène.

Avant les essais, afin d'assurer les meilleures propriétés au tube et une bonne qualité d'extrusion, on vérifie que les matières extrudées aient un taux d'humidité résiduel avant extrusion inférieur à 0.08%. Dans le cas contraire, on procède à une étape supplémentaire de séchage de la matière avant les essais, généralement dans un sécheur sous vide, pendant 1 nuit à 80°C.

Les tubes, qui répondent aux caractéristiques décrites dans la présente demande de brevet, ont été prélevés, après stabilisation des paramètres d'extrusion, les dimensions du tubes visées n'évoluant plus dans le temps. Le diamètre est contrôlé par un mesureur de diamètre laser installé en bout de ligne.

Généralement, la vitesse de ligne est typiquement de 20m/min. Elle varie généralement entre 5 et 100m/min.

La vitesse de vis des extrudeuses dépend de l'épaisseur de la couche et du diamètre de la vis comme cela est connu de l'homme de l'art.

De manière générale, les températures des extrudeuses et des outillages (tête et raccord) doivent être réglées de sorte à être suffisamment supérieures à la température de fusion des compositions considérées, de façon à ce qu'elles demeurent à l'état fondu, évitant ainsi qu'elles se solidifient et bloquent la machine.

Les structures tubulaires ont été testées sur différents paramètres (Tableau 2).

La quantité d'extractibles a été déterminée et les propriétés barrières ont été évaluées.

Le taux d'extractibles mesuré par contact avec de l'essence alcoolisée (« lavage fort ») permet de simuler une utilisation sur plusieurs années d'un tuyau de transport d'H2. La procédure utilisée est telle que décrite au tableau 3.

Le tableau 3 indique les tests utilisés et la classification des résultats.

**TABLEAU 2**

| Exemples et contre exemples | Extractibles | Barrière |
|---|---|---|
| Contre exemple 1: PA12-TL / liant / EVOH / liant / PA12-TL 400/50/150/50/350µm | >50 | Bien |
| Contre exemple 2: PA12-NoPlast / liant-NoPlast / EVOH / liant-no-plast / PA11-TL 400/50/150/50/350µm | >30 | Bien |
| Contre exemple 3: PA12-NoPlast / liant-NoPlast / EVOH / liant-no-plast / PA610-TL 400/50/150/50/350µm | >30 | Bien |
| Ex.1 : PA12-NoPlast / liant-NoPlast / EVOH / liant- NoPlast / PA610-NoPlast 400/50/150/50/350µm | **<5.5** | Bien |
| Ex.2 : PA12-NoPlast / liant-NoPlast / EVOH / liant- NoPlast / PA612-NoPlast 400/50/150/50/350µm | **<6** | Bien |
| Ex. 3 PA12-NoPlast / liant-NoPlast / EVOH / liant- NoPlast / coPA612-6T-NoPlast 400/50/150/50/350µm | **<6** | Bien |
| Ex. 4 PA12-NoPlast / liant-NoPlast / EVOH / PA6-NoPlast 400/50/150/400µm | **<6** | Bien |
| Ex. 5 PA12-NoPlast / liant-NoPlast / EVOH / PA610-NoPlast 400/50/150/400µm | **<5.5** | Bien |
| Ex. 6 PA610-NoPlast / EVOH / PA610-NoPlast 450/150/400 µm | **<5.5** | Bien |
| Ex. 7 PA11-TL / PA610-NoPlast / EVOH / PA610-NoPlast 150/300/150/400µm | **<5.5** | Bien |
| Ex. 8 PA11-TL / PA610-NoPlast / EVOH / PA610-NoPlast / PA11-NoPlast 150/300/150/250/150µm | **<5.5** | Bien |
| Ex. 9 PA12-NoPlast / liant-NoPlast / EVOH / liant-NoPlast / PA610-NoPlast 550/50/150/50/200µm | **<4.5** | Bien |
| Ex. 10 PA12-NoPlast / liant-NoPlast / EVOH24 / liant- NoPlast / PA610-NoPlast 400/50/150/50/350µm | **<5.5** | Très bien |
| Ex. 11 PA12-NoPlast / liant-NoPlast / EVOHhi / liant-NoPlast / PA610-NoPlast (550/50/150/50/200µ) | **<4.5** | Bien |
| Ex. 12 PA12-TL /liant/ EVOHhi / liant-NoPlast / PA610-NoPlast 550/50/150/50/200µ | **<5.5** | Bien |
| Ex. 13 PA12-TL / liant2 / EVOHhi / liant2-NoPlast / PA610-NoPlast 550/50/150/50/200µ | **<5.5** | Bien |
| Ex. 14 PA 12-TL / liant / EVOHhi / liant-NoPlast / PA612-NoPlast 550/50/150/50/200µ | **<6** | Bien |
| Ex. 15 PA12-TL / PPA10T / PA11-NoPlast 600/250/150µm | **<5** | limite |
| Ex. 16 PA12-TL / liant / EVOH / PA610-NoPlast / PPA10T 350/50/100/400/100µm | **<3** | Très bien |
| Ex. 17 PA12-TL / liant / EVOH / PPA10T / PA610-NoPlast 350/50/100/100/400µm | **<5.5** | Très bien |
| Ex. 18 PA12-TL / liant / EVOH / PA610-NoPlast / EFEPc 350/50/100/400/100µ | **<3** | Très bien |
| Ex. 19 PA11-TL / PA610-NoPlast / EVOH / PA610-NoPlast /PA11cond-NoPlast 400/50/150/300/100 | **<5.5** | Bien |
| Ex. 20 PA11- NoPlast / EVOH / PA11-NoPlast 550/150/300 | **<5** | bien |
| Ex. 21 PA11- NoPlast / Liant PVDF/ PVDF 800/100/100 | **<3** | Très bien |

**TABLEAU 3**

| **Propriétés** | **Très bien (TB)** | **Bien (B)** | **Limite (AB)** | **Mauvais (Mv)** |
|---|---|---|---|---|
| Barrière Bio-essence CE10 60°C g/m².24h, barrière d'épais 150µm | <0.2 | 0.2-1 | 1-3 | > 3 |
| Extractibles : ce test consistant en un tube rempli d'essence alcoolisée type FAM-B à 60°C, durant 96 heures, puis vidé et filtré dans un bécher qu'on laisse ensuite évaporer et dont on pèse le résidu, ce dernier devant être inférieur ou égal 6g/m2 (de surface interne de tube) | <4.5 g/m² de surface tube (surface interne int) | 4.5-5.5 g/m² de surface tube (surface interne int) | 5.5-6 g/m² de surface tube (surface interne int) | > 6 g/m² de surface tube (surface interne int) |

Les mesures de perméabilité aux essences (barrière Bio-essence) sont déterminées à 60°C selon une méthode gravimétrique avec le CE10 : isooctane/toluène/éthanol = 45/45/10 vol.%.

La perméabilité instantanée est nulle pendant la période d'induction, puis elle augmente progressivement jusqu'à une valeur à l'équilibre qui correspond à la valeur de perméabilité en régime permanent. Cette valeur obtenue en régime permanent est considérée comme étant la perméabilité du matériau.

Les contaminants extraits dans l'hydrogène des différentes couches d'intérieures des structures multicouches fabriquées à partir des compositions ci-dessus ont été quantifiés selon la norme CSA/ANSI CHMC 2 :19 :
Structure multicouche avec couche d'étanchéité à base de composition-I1 : <0,5%
Structure multicouche avec couche d'étanchéité à base de composition-I2 : <0,5%
Structure multicouche avec couche d'étanchéité à base de composition-I3 : <0,5%
Structure multicouche avec couche d'étanchéité à base de composition-I4 : <0,5%
Structure multicouche avec couche d'étanchéité à base de composition-I5 : <0,5%
Structure multicouche avec couche d'étanchéité à base de composition-C1 : >3%
Structure multicouche avec couche d'étanchéité à base de composition-C2 : >3%

### Compositions

PA12-TL : désigne une composition à base de polyamide 12 de Mn (masse moléculaire en nombre) 35000, contenant 6% de plastifiant BBSA (benzyl butyl sulfonamide), et 6% d'EPR fonctionnalisé anhydride Exxelor VA1801 (société Exxon), et de 1.2% de stabilisants organiques (constitués de 0.8% de phénol Lowinox 44B25 de la société Great Lakes, de 0.2% de phosphite Irgafos 168 de la société Ciba, de 0.2% d'anti-UV Tinuvin 312 de la société Ciba). La température de fusion de cette composition est de 175°C.
PA12-NoPlast = PA12-TL sans le plastifiant (ce dernier est remplacé par le même % en PA12)

PA11-TL désigne une composition à base de polyamide 11 de Mn (masse moléculaire en nombre) 29000, contenant 5% de plastifiant BBSA (benzyl butyl sulfonamide), 6% de modifiant choc type éthylène/acrylate d'éthyle/anhydride en rapport massique 68,5/30/1,5 (MFI 6 à 190°C sous 2.16 kg), et de 1.2% de stabilisants organiques (constitués de 0.8% de phénol Lowinox 44B25 de la société Great Lakes, de 0.2% de phosphite Irgafos 168 de la société Ciba, de 0.2% d'anti-UV Tinuvin 312 de la société Ciba). La température de fusion de cette composition est de 185°C.
PA11-NoPlast = PA11-TL sans le plastifiant (ce dernier est remplacé par PA11)
PA610-TL = PA610 + 12% modifiant choc EPR1 + stabilisant organique + 10% plastifiant
PA610-NoPlast = PA610-TL sans le plastifiant (ce dernier est remplacé par PA610)
PA612-TL = PA612 + 12% modifiant choc EPR1 + stabilisant organique + 9%plastifiant
PA612-NoPlast = PA612-TL sans le plastifiant (ce dernier est remplacé par PA612)
PA6-TL = PA6 + 12% modifiant choc EPR1 + stabilisant organique + 12% plastifiant
PA6-NoPlast = PA6-TL sans le plastifiant (ce dernier est remplacé par PA6)

- PA12 : Polyamide 12 de Mn (masse moléculaire en nombre) 35000. La température de fusion est de 178°C, son enthalpie de fusion est 54kJ/m2
- PA11 : Polyamide 11 de Mn (masse moléculaire en nombre) 29000. La température de fusion est de 190°C, son enthalpie de fusion est 56kJ/m2
- PA610 : Polyamide 6.10 de Mn (masse moléculaire en nombre) 30000. La température de fusion est de 223°C, son enthalpie de fusion est 61kJ/m2
- PA612 : Polyamide 6.12 de Mn (masse moléculaire en nombre) 29000. La température de fusion est de 218°C, son enthalpie de fusion est 67kJ/m2
- PA6 : Polyamide 6 de Mn (masse moléculaire en nombre) 28000. La température de fusion est de 220°C, son enthalpie de fusion est 68kJ/m2
- EPR1 : Désigne un EPR fonctionnalisé par un groupe réactif fonction anhydride (à 0.5-1% en masse), de MFI 9 (à 230°C, sous) 10kg, de type Exxellor VA1801 de la société Exxon.

Stabilisant organique = 1.2% de stabilisants organiques constitués de 0.8% de phénol (Lowinox 44B25 de la société Great Lakes), de 0.2% de phosphite (Irgafos 168 de la société Ciba, de 0.2% d'anti-UV (Tinuvin 312 de la société Ciba). Plastifiant = BBSA (benzyl butyl sulfonamide)
coPA612-6T-NoPlast = coPA6.12/6.T avec 20% mol de 6.T (donc 80% mol de 6.12)
(ce coPA fait MFI 235°C, 5kg = ( T° fusion = 200°C) + 20% EPR1 + stab orga
PPA10T = coPA10.T/6T de ratio molaire 60/40 T fusion 280°C + 18% EPR1 + stab orga
PA1 1cond-noplast = PA11 de Mn 15000 + 9%EPR1 + 22% de noir de carbone type Ensaco 200

Liant = Composition à base de 43.8% PA612 (t.q défini par ailleurs), de 25% de PA6 (t.q défini par ailleurs) et de 20% de modifiant choc type EPR1, et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la socité Ciba), et de 10% de plastifiant BBSA (benzyl butyl sulfonamide).

Liant-NoPlast = Composition à base de 48.8% PA612 (t.q défini par ailleurs), de 30% de PA6 (t.q défini par ailleurs), et de 20% de modifiant choc type EPR1, et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la socité Ciba).

Liant2 = Composition à base de 43.8% PA610 (t.q défini par ailleurs), de 25% de PA6 (t.q défini par ailleurs) et de 20% de modifiant choc type EPR1, et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la socité Ciba), et de 10% de plastifiant BBSA (benzyl butyl sulfonamide).

Liant2-NoPlast = Composition à base de 48.8% PA610 (t.q défini par ailleurs), de 30% de PA6 (t.q défini par ailleurs), et de 20% de modifiant choc type EPR1, et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la socité Ciba).
EVOH = EVOH à 32% d'éthylène, type EVAL FP101B (société Eval)
EVOH24 = EVOH à 24% d'éthylène, type EVAL M100B (société Eval)
EVOHhi = EVOH à 27% d'éthylène et modifié choc, type EVAL LA 170B(société Eval)
PPA10T/6T = coPA10.T/6.T avec 40% mol de 6.T (de MFI 300°C, 5kg = 8, et de T°C de fusion 280°C) + 15% d'EPR1 + stab orga
EFEPc = EFEP fonctionnalisé et conducteur type Neoflon RP5000AS de Daikin

Liant PA610 + PA6. Désigne une composition à base de PA612 (de Mn 29000, et tel que défini par ailleurs) et de 36% de PA6 (de Mn 28000, et tel que défini par ailleurs) et de 1.2% de stabilisants organiques (constitué de 0.8% de phénol Lowinox 44B25 de la société Great Lakes, de 0.2% de phosphite Irgafos 168 de la société Ciba, de 0.2% d'anti-UV Tinuvin 312 de la société Ciba).

Les structures présentant des couches dépourvues de plastifiant situées sous la barrière et notamment en contact avec l'hydrogène présentent d'excellents résultats sur le test d'extractibles et bien meilleurs que les contre exemples dans lesquels la couche en contact avec l'hydrogène est plastifiée.

## Revendications

1. Structure tubulaire multicouche (MLT) destinée au transport de l'hydrogène comprenant de l'extérieur vers l'intérieur au moins une couche barrière (1) et au moins une couche intérieure (2) situé au-dessous de la couche barrière,
ladite couche intérieure (2) ou l'ensemble des couches (2) et des autres couches éventuelles situées au-dessous de la couche barrière, contenant en moyenne de 0 à 1,5% en poids de plastifiant par rapport respectivement au poids total de la composition de la couche (2) ou au poids total de l'ensemble des compositions des couches (2) et des autres couches éventuelles situées au-dessous de la couche barrière,
ladite couche intérieure (2) présentant un taux d'extractible, déterminé selon la norme CSA/ANSI CHMC 2 :19, inférieur ou égal à 3% en poids, en particulier inférieure à 2% en poids de la somme des constituants de ladite composition,
ladite couche intérieure (2) comprenant majoritairement au moins un polyamide de type aliphatique ou constitué de plus de 75% de motifs aliphatiques, ledit polyamide aliphatique étant choisi parmi :
- un polyamide noté A présentant un nombre moyen d'atomes de carbone par atome d'azote noté C_{A} compris de de 4 à 7 ;
- un polyamide noté B et un nombre moyen d'atomes de carbone par atome d'azote noté C_{B} compris de 7,5 à 9,5 ;
- un polyamide noté C présentant un nombre moyen d'atomes de carbone par atome d'azote noté C_{C} compris de 10 à 18;
sous réserve que lorsque ladite couche intérieure (2) comprend au moins trois polyamides, l'un au moins desdits polyamides A, B ou C est exclu,
dans laquelle au moins une couche plus extérieure (3) située au-dessus de la couche barrière est présente, la dite couche extérieure (3) comprenant majoritairement au moins un polyamide de type aliphatique ou constitué de plus de 75% de motifs aliphatiques, en particulier ledit polyamide aliphatique présentant un nombre moyen d'atomes de carbone par atome d'azote compris de 9,5 à 18, avantageusement de 11 à 18,
dans laquelle au moins une deuxième couche extérieure (3') située au-dessus de la couche barrière est présente, et de préférence située au-dessus de la couche (3), ladite couche (3') étant plastifiée, ledit plastifiant étant en particulier présent en une proportion de 1,5% à 15% en poids par rapport au poids total de la composition de ladite couche, l'épaisseur de ladite couche (3') représente de préférence jusqu'à 20% de l'épaisseur totale de la structure tubulaire, en particulier jusqu'à 200µm.

2. Structure tubulaire multicouche (MLT) selon la revendication 1, dans laquelle ladite couche barrière est choisie parmi une couche en EVOH, une couche en fluoropolymère, notamment en PVDF et une couche en PPA.

3. Structure tubulaire multicouche (MLT) selon l'une des revendications 1 ou 2, dans laquelle ladite couche intérieure (2) ou chacune des couches (2) et des autres couches éventuelles situées au-dessous de la couche barrière est(sont) dépourvue(s) de plastifiant.

4. Structure tubulaire multicouche (MLT) selon la revendication 1, dans laquelle ladite couche extérieure (3) comprend de 0 à 15% de plastifiant par rapport au poids total de la composition de la couche (3), ou dans laquelle l'ensemble des couches extérieures comprennent en moyenne de 0 à 5% de plastifiant.

5. Structure tubulaire multicouche (MLT) selon l'une des revendications 1 à 4, dans laquelle la couche (3') est la plus extérieure et est la seule plastifiée, la (ou les) couche(s) (3) étant dépourvue(s) de plastifiant.

6. Structure tubulaire multicouche (MLT) selon l'une des revendications 1 à 5, dans laquelle au moins une couche (4) est présente, ladite couche (4) ne contenant pas plus de 15% en poids de plastifiant, de préférence pas plus de 1,5% en poids de plastifiant, par rapport au poids total des constituants de la couche (4), avantageusement la couche (4) est dépourvue de plastifiant,
ladite couche (4) comprenant majoritairement au moins un polyamide de type aliphatique ou constitué de plus de 75% de motifs aliphatiques, ledit polyamide aliphatique étant choisi parmi :
- un polyamide noté A présentant un nombre moyen d'atomes de carbone par atome d'azote noté C_{A} compris de 4 à 7 ;
- un polyamide noté B et un nombre moyen d'atomes de carbone par atome d'azote noté C_{B} compris de 7,5 à 9,5 ;
- un polyamide noté C présentant un nombre moyen d'atomes de carbone par atome d'azote noté C_{C} compris de 10 à 18 ;
sous réserve que lorsque ladite couche (4) comprend au moins trois polyamides, l'un au moins desdits polyamides A, B ou C est exclu,
ou ladite couche (4) est une couche de liant dont l'épaisseur représente jusqu'à 15% de la structure (MLT)
ladite couche (4) étant située entre la couche barrière (1) et la couche intérieure (2) et/ou entre la couche extérieure (3) et la couche barrière (1).

7. Structure tubulaire multicouche (MLT) selon la revendication 6, dans laquelle une couche (4') est présente, ladite couche (4') comprenant majoritairement au moins un polyamide de type aliphatique ou constitué de plus de 75% de motifs aliphatiques, ledit polyamide aliphatique étant choisi parmi :
- un polyamide noté A présentant un nombre moyen d'atomes de carbone par atome d'azote noté C_{A} compris de 4 à 7 ;
- un polyamide noté B et un nombre moyen d'atomes de carbone par atome d'azote noté C_{B} compris de 7,5 à 9,5 ;
- un polyamide noté C présentant un nombre moyen d'atomes de carbone par atome d'azote noté C_{C} compris de 10 à 18 ;
sous réserve que lorsque ladite couche (4') comprend au moins trois polyamides, l'un au moins desdits polyamides A, B ou C est exclu,
ou ladite couche (4') est une couche de liant dont l'épaisseur représente jusqu'à 15% de la structure (MLT),
ledit au moins polyamide de ladite couche (4') pouvant être identique ou différent dudit polyamide de la couche (4) ;
ladite couche (4') étant située entre la couche extérieure (3) et la couche barrière (1) et ladite couche de liant (4) étant située entre la couche barrière (1) et la couche intérieure (2).

8. Structure tubulaire multicouche (MLT) selon l'une des revendications 1 à 7, dans laquelle le polyamide de la couche intérieure (2) ou le polyamide de la couche extérieure (3) est un polyamide totalement aliphatique, de préférence le polyamide de la couche intérieure (2) et le polyamide de la couche extérieure (3) sont des polyamides totalement aliphatiques.

9. Structure tubulaire multicouche (MLT) selon l'une des revendications 1 à 8, dans laquelle une deuxième couche barrière (5) est présente, ladite deuxième couche barrière couche (5) étant adjacente ou non à la première couche barrière (1) et située au-dessous de ladite couche barrière (1).

10. Structure tubulaire multicouche (MLT) selon l'une des revendications 2 à 9, dans laquelle ladite couche barrière est une couche en EVOH comprenant jusqu'à 27% d'éthylène.

11. Structure tubulaire multicouche (MLT) selon l'une des revendications 2 à 9, dans laquelle ladite couche barrière est une couche en EVOH comprenant un modifiant choc.

12. Structure tubulaire multicouche (MLT) selon l'une des revendications 9 à 10, dans laquelle la couche barrière (1) est une couche en EVOH et la deuxième couche barrière (5) est une couche en PPA ou polymère fluoré, en particulier de type ETFE, EFEP, CPT.

13. Structure tubulaire multicouche (MLT) selon l'une des revendications 1 à 12, dans laquelle le polyamide de la couche intérieure (2) est une composition à base d'un polyamide choisi parmi A, B ou C, tels que définis dans la revendication 1, en particulier PA6, PA66, PA6/66, PA11, PA610, PA612, PA1012, les copolyamides correspondants et les mélanges desdits polyamides ou copolyamides, les polyamides obtenus à partir d'un lactame étant avantageusement lavés.

14. Structure tubulaire multicouche (MLT) selon l'une des revendications 1 à 13, dans laquelle le polyamide de la couche extérieure (3) est un polyamide choisi parmi B ou C tels que définis dans la revendication 1, en particulier PA 11, PA12, PA610, PA612, PA1012, les copolyamides correspondants et les mélanges desdits polyamides ou copolyamides, les polyamides obtenus à partir d'un lactame étant avantageusement lavés, un polyamide noté B présentant un nombre moyen d'atomes de carbone par atome d'azote noté C_{B} compris de 7,5 à 9,5 ; un polyamide noté C présentant un nombre moyen d'atomes de carbone par atome d'azote noté C_{C} compris de 10 à 18.

15. Structure tubulaire multicouche (MLT) selon l'une des revendications 1 à 14, dans laquelle le polyamide de la couche intérieure (2) est une composition à base d'un polyamide choisi parmi A, B ou C tels que définis dans la revendication 1, en particulier PA6, PA66, PA6/66, PA11, PA610, PA612, PA1012, les copolyamides correspondants et les mélanges desdits polyamides ou copolyamides, les polyamides obtenus à partir d'un lactame étant avantageusement lavés, et le polyamide de la couche extérieure (3) est un polyamide choisi parmi B ou C tels que définis dans la revendication 1, en particulier PA 11, PA12, PA610, PA612, PA1012, les copolyamides correspondants et les mélanges desdits polyamides ou copolyamides, les polyamides obtenus à partir d'un lactame étant avantageusement lavés, un polyamide noté A présentant un nombre moyen d'atomes de carbone par atome d'azote noté C_{A} compris de de 4 à 7 ; un polyamide noté B présentant un nombre moyen d'atomes de carbone par atome d'azote noté C_{B} compris de 7,5 à 9,5 ; un polyamide noté C présentant un nombre moyen d'atomes de carbone par atome d'azote noté C_{C} compris de 10 à 18.

16. Structure tubulaire multicouche (MLT) selon l'une des revendications 1 à 15, dans laquelle le polyamide de la couche intérieure (2) ou de l'une au moins des autres couches (2) est un polyamide conducteur.

17. Structure tubulaire multicouche (MLT) selon l'une des revendications 7 à 16, dans laquelle le polyamide de la couche (4) et/ou (4') est choisi parmi les mélanges binaires : PA6 et PA12, PA6 et PA612, PA6 et PA610, PA12 et PA612, PA12 et PA610, PA1010 et PA612, PA1010 et PA610, PA1012 et PA612, PA1012 et PA610, et le mélange ternaire : PA6, PA614 et PA12.

18. Structure tubulaire multicouche (MLT) selon l'une des revendications 7 à 17, dans laquelle au moins une des couches (2), (3), (4) et (4') comprend au moins un modifiant choc et/ou au moins un additif.

19. Structure tubulaire multicouche (MLT) selon l'une des revendications 1 à 18, dans laquelle la structure comprend trois couches dans l'ordre suivant (3)//(1)//(2), les couches (3) et/ou (2) ne contenant pas plus de 1,5% en poids de plastifiant, par rapport au poids total de la composition de chaque couche, en particulier la couche (3) et/ou (2) est(sont) dépourvue(s) de plastifiant.

20. Structure tubulaire multicouche (MLT) selon l'une des revendications 4 à 18, dans laquelle la structure comprend quatre couches dans l'ordre suivant (3')//(3)//(1)//(2), la couche (3') étant telle que définie dans la revendication 6, la couche (2) et/ou (3) ne contenant pas plus de 1,5% en poids de plastifiant, par rapport au poids total de la composition de chaque couche, en particulier la couche (2) et/ou (3) est (sont) dépourvue(s) de plastifiant.

21. Structure tubulaire multicouche (MLT) selon l'une des revendications 9 à 18, dans laquelle la structure comprend cinq couches dans l'ordre suivant :
(3')//(3)//(1)//(5)//(2) dans laquelle la couche (1) est une couche d'EVOH, la couche (5) est une couche de PPA, la couche (2) ne contenant pas plus de 1,5% en poids de plastifiant, par rapport au poids total de la composition de chaque couche, en particulier la couche (2) est dépourvue de plastifiant, la couche (3) et (3') comprenant du plastifiant ; ou
(3')//(3)//(1)//( 2)//( 5) dans laquelle la couche (1) est une couche d'EVOH, la couche (5) est une couche de PPA, la couche (2) ne contenant pas plus de 1,5% en poids de plastifiant, par rapport au poids total de la composition de chaque couche, en particulier la couche (2) est dépourvue de plastifiant, la couche (3) et (3') comprenant du plastifiant ; ou
(3)//(4')//(1)//(4)//(2) dans laquelle la couche (3) est telle que définie dans la revendication 4, la couche (2) et (4) ne contenant pas plus de 1,5% en poids de plastifiant, par rapport au poids total de la composition de chaque couche, en particulier la couche (2) et/ou (4) est(sont) dépourvue(s) de plastifiant, la couche (4') comprenant du plastifiant.

22. Structure tubulaire multicouche (MLT) selon l'une des revendications 6 à 18, dans laquelle la structure comprend les couches dans l'ordre suivant :
(3')//(3)//(4')//(1)//(4)//(2) dans laquelle les couches (3) et (3') sont telles que définies dans les revendication 4 et 6, la couche (2) et (4) ne contenant pas plus de 1,5% en poids de plastifiant, par rapport au poids total de la composition de chaque couche, en particulier la couche (2) et/ou (4) est(sont) dépourvue(s) de plastifiant, la couche (4') comprenant du plastifiant.

23. Structure multicouche selon l'une des revendications 1 à 22, **caractérisée en ce qu'**elle comprend un raccord en polyamide à l'une et/ou l'autre de ses extrémités, ledit raccord étant soudé à ladite structure.

24. Structure selon la revendication 23, **caractérisée en ce que** le polyamide dudit raccord est choisi parmi PA6, PA66, PA6/66, PA11, PA610, PA612, PA1012.

25. Utilisation d'une structure tubulaire multicouche MLT, telle que définie dans l'une des revendications 1 à 24, pour le transport de l'hydrogène.

## Patentansprüche

1. Mehrschichtige rohrförmige Struktur (MLT), die für den Transport von Wasserstoff bestimmt ist, umfassend von außen nach innen mindestens eine Sperrschicht (1) und mindestens eine innere Schicht (2), die sich unterhalb der Sperrschicht befindet,
wobei die innere Schicht (2) oder die Gesamtheit der Schichten (2) und der möglichen anderen Schichten, die sich unterhalb der Sperrschicht befinden, im Durchschnitt 0 bis 1,5 Gewichts-% Weichmacher enthält, jeweils bezogen auf das Gesamtgewicht der Zusammensetzung der Schicht (2) oder das Gesamtgewicht aller Zusammensetzungen der Schichten (2) und der optionalen anderen Schichten, die sich unterhalb der Sperrschicht befinden,
wobei die innere Schicht (2) einen extrahierbaren Anteil, bestimmt gemäß der Norm CSA/ANSI CHMC 2:19, von weniger als oder gleich wie 3 Gewichts-%, insbesondere weniger als 2 Gewichts-% der Summe der Bestandteile der Zusammensetzung aufweist,
die innere Schicht (2) mehrheitlich umfassend mindestens ein Polyamid vom aliphatischen Typ umfasst oder bestehend aus mehr als 75 % aliphatischen Einheiten, wobei das aliphatische Polyamid ausgewählt ist aus:
- einem mit A bezeichneten Polyamid, das eine durchschnittliche Anzahl von Kohlenstoffatomen pro mit C_{A} bezeichnetem Stickstoffatom von 4 bis 7 aufweist;
- einem mit B bezeichneten Polyamid und einer durchschnittlichen Anzahl von Kohlenstoffatomen pro mit C_{B} bezeichnetem Stickstoffatom von 7,5 bis 9,5 aufweist;
- einem mit C bezeichneten Polyamid, das eine durchschnittliche Anzahl von Kohlenstoffatomen pro mit C_{C} bezeichnetem Stickstoffatom von 10 bis 18 aufweist;
mit der Maßgabe, dass, wenn die innere Schicht (2) mindestens drei Polyamide umfasst, mindestens eines der Polyamide A, B oder C ausgeschlossen ist,
wobei mindestens eine äußerste Schicht (3) vorhanden ist, die sich oberhalb der Sperrschicht befindet, die äußere Schicht (3) umfassend mehrheitlich mindestens ein Polyamid vom aliphatischen Typ oder bestehend aus mehr als 75 % aliphatischen Einheiten, wobei das aliphatische Polyamid insbesondere eine durchschnittliche Anzahl von Kohlenstoffatomen pro Stickstoffatom von 9,5 bis 18, vorzugsweise 11 bis 18, aufweist,
wobei mindestens eine zweite äußere Schicht (3') vorhanden ist, die sich oberhalb der Sperrschicht befindet, und sich vorzugsweise oberhalb der Schicht (3) befindet, wobei die Schicht (3') plastifiziert ist, wobei der Weichmacher insbesondere in einem Anteil von 1,5 Gewichts-% bis 15 Gewichts-%, bezogen auf das Gesamtgewicht der Zusammensetzung der Schicht, vorhanden ist, die Stärke der Schicht (3') vorzugsweise bis zu 20 % der Gesamtstärke der rohrförmigen Struktur, insbesondere bis zu 200 µm, darstellt.

2. Mehrschichtige rohrförmige Struktur (MLT) nach Anspruch 1, wobei die Sperrschicht ausgewählt ist aus einer Schicht aus EVOH, einer Schicht aus Fluorpolymer, insbesondere PVDF, und einer Schicht aus PPA.

3. Mehrschichtige rohrförmige Struktur (MLT) nach einem der Ansprüche 1 oder 2, wobei die innere Schicht (2) oder jede der Schichten (2) und optionale weitere Schichten unterhalb der Sperrschicht frei von Weichmachern ist/sind.

4. Mehrschichtige rohrförmige Struktur (MLT) nach Anspruch 1, wobei die äußere Schicht (3) 0 bis 15 % Weichmacher, bezogen auf das Gesamtgewicht der Zusammensetzung der Schicht (3), umfasst, oder wobei alle äußere Schichten im Durchschnitt 0 bis 5 % Weichmacher umfassen.

5. Mehrschichtige rohrförmige Struktur (MLT) nach einem der Ansprüche 1 bis 4, wobei die Schicht (3') die äußerste ist und die einzige weichgemachte Schicht ist, wobei die Schicht(en) (3) frei von Weichmachern ist/sind.

6. Mehrschichtige rohrförmige Struktur (MLT) nach einem der Ansprüche 1 bis 5, wobei mindestens eine Schicht (4) vorhanden ist, wobei die Schicht (4) nicht mehr als 15 Gewichts-% Weichmacher, vorzugsweise nicht mehr als 1,5 Gewichts-% Weichmacher, bezogen auf das Gesamtgewicht der Bestandteile der Schicht (4), enthält, die Schicht (4) vorteilhafterweise frei von Weichmachern ist,
die Schicht (4) mehrheitlich umfassend mindestens ein Polyamid vom aliphatischen Typ umfasst oder bestehend aus mehr als 75 % aliphatischen Einheiten, wobei das aliphatische Polyamid ausgewählt ist aus:
- einem mit A bezeichneten Polyamid, das eine durchschnittliche Anzahl von Kohlenstoffatomen pro mit C_{A} bezeichnetem Stickstoffatom von 4 bis 7 aufweist;
- einem mit B bezeichneten Polyamid und einer durchschnittlichen Anzahl von Kohlenstoffatomen pro mit C_{B} bezeichnetem Stickstoffatom von 7,5 bis 9,5 aufweist;
- einem mit C bezeichneten Polyamid, das eine durchschnittliche Anzahl von Kohlenstoffatomen pro mit C_{C} bezeichnetem Stickstoffatom von 10 bis 18 aufweist;
mit der Maßgabe, dass, wenn die Schicht (4) mindestens drei Polyamide umfasst, mindestens eines der Polyamide A, B oder C ausgeschlossen ist,
oder die Schicht (4) eine Bindemittelschicht ist, deren Stärke bis zu 15 % der Struktur (MLT) darstellt
wobei sich die Schicht (4) zwischen der Sperrschicht (1) und der inneren Schicht (2) und/oder zwischen der äußeren Schicht (3) und der Sperrschicht (1) befindet.

7. Mehrschichtige rohrförmige Struktur (MLT) nach Anspruch 6, wobei eine Schicht (4') vorhanden ist, die Schicht (4') mehrheitlich umfassend mindestens ein Polyamid vom aliphatischen Typ umfasst oder bestehend aus mehr als 75 % aliphatischen Einheiten, wobei das aliphatische Polyamid ausgewählt ist aus:
- einem mit A bezeichneten Polyamid, das eine durchschnittliche Anzahl von Kohlenstoffatomen pro mit C_{A} bezeichnetem Stickstoffatom von 4 bis 7 aufweist;
- einem mit B bezeichneten Polyamid und einer durchschnittlichen Anzahl von Kohlenstoffatomen pro mit C_{B} bezeichnetem Stickstoffatom von 7,5 bis 9,5 aufweist;
- einem mit C bezeichneten Polyamid, das eine durchschnittliche Anzahl von Kohlenstoffatomen pro mit C_{C} bezeichnetem Stickstoffatom von 10 bis 18 aufweist;
mit der Maßgabe, dass, wenn die Schicht (4) mindestens drei Polyamide umfasst, mindestens eines der Polyamide A, B oder C ausgeschlossen ist,
oder die Schicht (4') eine Bindemittelschicht ist, deren Stärke bis zu 15 % der Struktur (MLT) darstellt
wobei das mindestens eine Polyamid der Schicht (4') gleich wie das Polyamid der Schicht (4) oder davon verschieden sein kann;
wobei sich die Schicht (4') zwischen der äußeren Schicht (3) und der Sperrschicht (1) befindet und sich die Bindemittelschicht (4) zwischen der Sperrschicht (1) und der inneren Schicht (2) befindet.

8. Mehrschichtige rohrförmige Struktur (MLT) nach einem der Ansprüche 1 bis 7, wobei das Polyamid der inneren Schicht (2) oder das Polyamid der äußeren Schicht (3) ein vollständig aliphatisches Polyamid ist, vorzugsweise das Polyamid der inneren Schicht (2) und das Polyamid der äußeren Schicht (3) vollständig aliphatische Polyamide sind.

9. Mehrschichtige rohrförmige Struktur (MLT) nach einem der Ansprüche 1 bis 8, wobei eine zweite Sperrschicht (5) vorhanden ist, wobei die zweite Sperrschicht (5) an die erste Sperrschicht (1) angrenzt oder nicht und sich unterhalb der Sperrschicht (1) befindet.

10. Mehrschichtige rohrförmige Struktur (MLT) nach einem der Ansprüche 2 bis 9, wobei die Sperrschicht eine Schicht aus EVOH ist, umfassend bis zu 27 % Ethylen.

11. Mehrschichtige rohrförmige Struktur (MLT) nach einem der Ansprüche 2 bis 9, wobei die Sperrschicht eine Schicht aus EVOH ist, umfassend einen Schlagzähmodifizierer.

12. Mehrschichtige rohrförmige Struktur (MLT) nach einem der Ansprüche 9 bis 10, wobei die Sperrschicht (1) eine Schicht aus EVOH ist und die zweite Sperrschicht (5) eine Schicht aus PPA oder einem fluorierten Polymer, insbesondere vom Typ ETFE, EFEP, CPT, ist.

13. Mehrschichtige rohrförmige Struktur (MLT) nach einem der Ansprüche 1 bis 12, wobei das Polyamid der innere Schicht (2) eine Zusammensetzung auf Basis eines Polyamids ist, das ausgewählt ist aus A, B oder C, wie es in Anspruch 1 definiert ist, insbesondere PA6, PA66, PA6/66, PA11, PA610, PA612, PA1012, den entsprechenden Copolyamiden und Gemischen dieser Polyamide oder Copolyamide, wobei aus einem Lactam erlangte Polyamide vorteilhaft gewaschen sind.

14. Mehrschichtige rohrförmige Struktur (MLT) nach einem der Ansprüche 1 bis 13, wobei das Polyamid der äußeren Schicht (3) ein Polyamid ist, das ausgewählt ist aus B oder C, wie es in Anspruch 1 definiert ist, insbesondere PA11, PA12, PA610, PA612, PA1012, den entsprechenden Copolyamiden und Gemischen dieser Polyamide oder Copolyamide, wobei die aus einem Lactam erlangten Polyamide vorteilhafterweise gewaschen sind, ein mit B bezeichnetes Polyamid eine durchschnittliche Anzahl von Kohlenstoffatomen pro mit C_{B} bezeichnetem Stickstoffatom von 7,5 bis 9,5 aufweist; einem mit C bezeichneten Polyamid, das eine durchschnittliche Anzahl von Kohlenstoffatomen pro mit C_{C} bezeichnetem Stickstoffatom von 10 bis 18 aufweist;

15. Mehrschichtige rohrförmige Struktur (MLT) nach einem der Ansprüche 1 bis 14, wobei das Polyamid der innere Schicht (2) eine Zusammensetzung auf Basis eines Polyamids ist, das ausgewählt ist aus A, B oder C, wie es in Anspruch 1 definiert ist, insbesondere PA6, PA66, PA6/66, PA11, PA610, PA612, PA1012, den entsprechenden Copolyamiden und Gemischen dieser Polyamide oder Copolyamide, wobei die aus einem Lactam erlangten Polyamide vorteilhafterweise gewaschen sind, und das Polyamid der äußeren Schicht (3) ein Polyamid ist, das ausgewählt ist aus B oder C, wie es in Anspruch 1 definiert ist, insbesondere PA11, PA12, PA610, PA612, PA1012, den entsprechenden Copolyamiden und Gemischen dieser Polyamide oder Copolyamide, wobei die aus einem Lactam erlangten Polyamide vorteilhafterweise gewaschen sind, einem mit A bezeichneten Polyamid, das eine durchschnittliche Anzahl von Kohlenstoffatomen pro mit C_{A} bezeichnetem Stickstoffatom von 4 bis 7 aufweist; einem mit B bezeichneten Polyamid, das eine durchschnittlichen Anzahl von Kohlenstoffatomen pro mit C_{B} bezeichnetem Stickstoffatom von 7,5 bis 9,5 aufweist; einem mit C bezeichneten Polyamid, das eine durchschnittliche Anzahl von Kohlenstoffatomen pro mit C_{C} bezeichnetem Stickstoffatom von 10 bis 18 aufweist;

16. Mehrschichtige rohrförmige Struktur (MLT) nach einem der Ansprüche 1 bis 15, wobei das Polyamid der inneren Schicht (2) oder mindestens einer der anderen Schichten (2) ein leitendes Polyamid ist.

17. Mehrschichtige rohrförmige Struktur (MLT) nach einem der Ansprüche 7 bis 16, wobei das Polyamid der Schicht (4) und/oder (4') ausgewählt ist aus binären Gemischen: PA6 und PA12, PA6 und PA612, PA6 und PA610, PA12 und PA612, PA12 und PA610, PA1010 und PA612, PA1010 und PA610, PA1012 und PA612, PA1012 und PA610, und dem ternären Gemisch: PA6, PA614 und PA12.

18. Mehrschichtige rohrförmige Struktur (MLT) nach einem der Ansprüche 7 bis 17, wobei mindestens eine der Schichten (2), (3), (4) und (4') mindestens einen Schlagzähmodifizierer und/oder mindestens ein Additiv umfasst.

19. Mehrschichtige rohrförmige Struktur (MLT) nach einem der Ansprüche 1 bis 18, wobei die Struktur drei Schichten in der folgenden Reihenfolge (3)//(1)//(2) umfasst, die Schichten (3) und/oder (2) nicht mehr als 1,5 Gewichts-% Weichmacher, bezogen auf das Gesamtgewicht der Zusammensetzung jeder Schicht, enthalten, insbesondere ist/sind die Schicht (3) und/oder (2) frei von Weichmacher.

20. Mehrschichtige rohrförmige Struktur (MLT) nach einem der Ansprüche 4 bis 18, wobei die Struktur vier Schichten in der folgenden Reihenfolge (3')//(3)//(1)//(2) umfasst, wobei die Schicht (3') wie in Anspruch 6 definiert ist, wobei die Schicht (2) und/oder (3) nicht mehr als 1,5 Gewichts-% Weichmacher, bezogen auf das Gesamtgewicht der Zusammensetzung jeder Schicht, enthält, insbesondere ist/sind die Schicht (2) und/oder (3) frei von Weichmacher.

21. Mehrschichtige rohrförmige Struktur (MLT) nach einem der Ansprüche 9 bis 18, wobei die Struktur fünf Schichten in der folgenden Reihenfolge umfasst: (3')//(3)//(1)//(5)//(2), wobei die Schicht (1) eine EVOH-Schicht ist, die Schicht (5) eine PPA-Schicht ist, die Schicht (2) nicht mehr als 1,5 Gewichts-% Weichmacher, bezogen auf das Gesamtgewicht der Zusammensetzung jeder Schicht, enthält, insbesondere die Schicht (2) frei von Weichmacher ist, die Schicht (3) und (3') Weichmacher umfassen; oder
(3')//(3)//(1)//(2)//(5), wobei die Schicht (1) eine EVOH-Schicht ist, die Schicht (5) eine PPA-Schicht ist, die Schicht (2) nicht mehr als 1,5 Gewichts-% Weichmacher, bezogen auf das Gesamtgewicht der Zusammensetzung jeder Schicht, enthält, insbesondere die Schicht (2) frei von Weichmacher ist, die Schicht (3) und (3') Weichmacher umfassen; oder (3)//(4')//(1)//(4)//(2)wobei die Schicht (3) wie in Anspruch 4 definiert ist, die Schicht (2) und (4) nicht mehr als 1,5 Gewichts-% Weichmacher, bezogen auf das Gesamtgewicht der Zusammensetzung jeder Schicht, enthalten, insbesondere die Schicht (2) und/oder (4) frei von Weichmacher ist, wobei die Schicht (4') Weichmacher umfasst.

22. Mehrschichtige rohrförmige Struktur (MLT) nach einem der Ansprüche 6 bis 18, wobei die Struktur die Schichten in der folgenden Reihenfolge umfasst: (3')//(3)//(4')//(1)//(4)//(2), wobei die Schichten (3) und (3') wie definiert in den Ansprüchen 4 und 6 sind, die Schicht (2) und (4) nicht mehr als 1,5 Gewichts-% Weichmacher, bezogen auf das Gesamtgewicht der Zusammensetzung jeder Schicht, enthalten, insbesondere die Schicht (2) und/oder (4) frei von Weichmacher ist, wobei die Schicht (4') Weichmacher umfasst.

23. Mehrschichtige Struktur nach einem der Ansprüche 1 bis 22, **dadurch gekennzeichnet, dass** sie an einem und/oder dem anderen Ende einen Polyamid-Verbinder aufweist, wobei der Verbinder an die Struktur geschweißt ist.

24. Struktur nach Anspruch 23, **dadurch gekennzeichnet, dass** das Polyamid des Verbinders ausgewählt ist aus PA6, PA66, PA6/66, PA11, PA610, PA612, PA1012.

25. Verwendung einer mehrschichtigen rohrförmige Struktur MLT, wie definiert in einem der Ansprüche 1 bis 24, für den Transport von Wasserstoff.

## Claims

1. A multilayer tubular structure (MLT) intended for the transportation of hydrogen, comprising, from the outside toward the inside, at least one barrier layer (1) and at least one internal layer (2) located below the barrier layer,
said internal layer (2) or the combination of the layers (2) and of the other optional layers located below the barrier layer containing, on average, from 0% to 1.5% by weight of plasticizer, with respect respectively to the total weight of the composition of the layer (2) or to the total weight of the combination of the compositions of the layers (2) and of the other optional layers located below the barrier layer,
said internal layer (2) exhibiting a content of extractables, determined according to the standard CSA/ANSI CHMC 2:19, of less than or equal to 3% by weight of the sum of the constituents of said composition,
said internal layer (2) predominantly comprising at least one polyamide of aliphatic type or consisting of more than 75% of aliphatic units, said aliphatic polyamide being chosen from:
a polyamide, denoted A, exhibiting a mean number of carbon atoms per nitrogen atom, denoted C_{A}, of from 4 to 7;
a polyamide, denoted B, and a mean number of carbon atoms per nitrogen atom, denoted C_{B}, of from 7.5 to 9.5;
a polyamide, denoted C, exhibiting a mean number of carbon atoms per nitrogen atom, denoted C_{C}, of from 10 to 18;
with the proviso that, when said internal layer (2) comprises at least three polyamides, one at least of said polyamides A, B and C is excluded,
at least one, more external, layer (3), located above the barrier layer, is present, said external layer (3) predominantly comprising at least one polyamide of aliphatic type or consisting of more than 75% of aliphatic units, in particular the said aliphatic polyamide exhibiting a mean number of carbon atoms per nitrogen atom of from 9.5 to 18, advantageously from 11 to 18,
at least one second external layer (3') located above the barrier layer is present, and preferably located above the layer (3), said layer (3') being plasticized, said plasticizer being in particular present in a proportion of from 1.5% to 15% by weight, with respect to the total weight of the composition of said layer; the thickness of said layer (3') preferably represents up to 20% of the total thickness of the tubular structure, in particular up to 200 µm.

2. The multilayer tubular structure (MLT) according to claim 1, in which said barrier layer is chosen from an EVOH layer, a fluoropolymer layer, and a PPA layer, in particular PVDF and a layer in PPA.

3. The multilayer tubular structure (MLT) according to claim 1 or 2, in which said internal layer (2) or each of the layers (2) and of the other optional layers located below the barrier layer is (are) devoid of plasticizer.

4. The multilayer tubular structure (MLT) according to claim 1, in which said external layer (3) comprises from 0% to 15% of plasticizer, with respect to the total weight of the composition of the layer (3), or in which the combined external layers comprise, on average, from 0% to 5% of plasticizer.

5. The multilayer tubular structure (MLT) according to one of claims 1 to 4, in which the layer (3') is the outermost layer and is the only layer which is plasticized, the layer(s) (3) being devoid of plasticizer.

6. The multilayer tubular structure (MLT) according to one of claims 1 to 5, in which at least one layer (4) is present, said layer (4) not containing more than 15% by weight of plasticizer, with respect to the total weight of the constituents of the layer (4), advantageously, the layer (4) is devoid of plasticizer,
said layer (4) predominantly comprising at least one polyamide of aliphatic type or consisting of more than 75% of aliphatic units, said aliphatic polyamide being chosen from:
a polyamide, denoted A, exhibiting a mean number of carbon atoms per nitrogen atom, denoted C_{A}, of from 4 to 7;
a polyamide, denoted B, and a mean number of carbon atoms per nitrogen atom, denoted C_{B}, of from 7.5 to 9.5;
a polyamide, denoted C, exhibiting a mean number of carbon atoms per nitrogen atom, denoted C_{C}, of from 10 to 18;
with the proviso that, when said layer (4) comprises at least three polyamides, at least one of said polyamides A, B and C is excluded,
or said layer (4) is a tie layer, the thickness of which represents up to 15% of the (MLT) structure, said layer (4) being located between the barrier layer (1) and the internal layer (2) and/or between the external layer (3) and the barrier layer (1).

7. The multilayer tubular structure (MLT) according to claim 6, in which a layer (4') is present, said layer (4') predominantly comprising at least one polyamide of aliphatic type or consisting of more than 75% of aliphatic units, said aliphatic polyamide being chosen from:
a polyamide, denoted A, exhibiting a mean number of carbon atoms per nitrogen atom, denoted C_{A}, of from 4 to 7;
a polyamide, denoted B, and a mean number of carbon atoms per nitrogen atom, denoted C_{B}, of from 7.5 to 9.5;
a polyamide, denoted C, exhibiting a mean number of carbon atoms per nitrogen atom, denoted C_{C}, of from 10 to 18;
with the proviso that, when said layer (4') comprises at least three polyamides, one at least of said polyamides A, B and C is excluded,
or said layer (4') is a tie layer, the thickness of which represents up to 15% of the (MLT) structure, it being possible for said at least one polyamide of said layer (4') to be identical to or different from said polyamide of the layer (4);
said layer (4') being located between the external layer (3) and the barrier layer (1) and said tie layer (4) being located between the barrier layer (1) and the internal layer (2).

8. The multilayer tubular structure (MLT) according to one of claims 1 to 7, in which the polyamide of the internal layer (2) or the polyamide of the external layer (3) is a completely aliphatic polyamide, preferably the polyamide of the internal layer (2) and the polyamide of the external layer (3) is a completely aliphatic polyamide.

9. The multilayer tubular structure (MLT) according to one of claims 1 to 8, in which a second barrier layer (5) is present, said second barrier layer (5) being adjacent or not adjacent to the first barrier layer (1) and located below said barrier layer (1).

10. The multilayer tubular structure (MLT) according to one of claims 2 to 9, in which said barrier layer is an EVOH layer comprising up to 27% of ethylene.

11. The multilayer tubular structure (MLT) according to one of claims 2 to 9, in which said barrier layer is an EVOH layer comprising an impact modifier.

12. The multilayer tubular structure (MLT) according to one of claims 2 to 10, in which the barrier layer (1) is an EVOH layer and the second barrier layer (5) is a PPA or fluoropolymer layer, the fluoropolymer being in particular of ETFE, EFEP or CPT type.

13. The multilayer tubular structure (MLT) according to one of claims 1 to 12, in which the polyamide of the internal layer (2) is a composition based on a polyamide chosen from A, B or C, as defined in claim 1, in particular PA6, PA66, PA6/66, PA11, PA610, PA612 or PA1012, the corresponding copolyamides and the blends of said polyamides or copolyamides, the polyamides obtained from a lactam being advantageously washed.

14. The multilayer tubular structure (MLT) according to one of claims 1 to 13, in which the polyamide of the external layer (3) is a polyamide chosen from B or C, as defined in claim 1, in particular PA11, PA12, PA610, PA612 or PA1012,the corresponding copolyamides and the blends of said polyamides or copolyamides, the polyamides obtained from a lactam being advantageously washed, a polyamide, denoted B, exhibiting a mean number of carbon atoms per nitrogen atom, denoted C_{B}, of from 7.5 to 9.5; a polyamide, denoted C, exhibiting a mean number of carbon atoms per nitrogen atom, denoted C_{C}, of from 10 to 18.

15. The multilayer tubular structure (MLT) according to one of claims 1 to 14, in which the polyamide of the internal layer (2) is a composition based on a polyamide chosen from A, B or C, as defined in claim 1, in particular PA6, PA66, PA6/66, PA11, PA610, PA612 or PA1012, the corresponding copolyamides and the blends of said polyamides or copolyamides, the polyamides obtained from a lactam being advantageously washed, and the polyamide of the external layer (3) is a polyamide chosen from B or C, as defined in claim 1, in particular PA11, PA12, PA610, PA612 or PA1012, the corresponding copolyamides and the blends of said polyamides or copolyamides, the polyamides obtained from a lactam being advantageously washed; a polyamide, denoted A, exhibiting a mean number of carbon atoms per nitrogen atom, denoted C_{A}, of from 4 to 7 ; a polyamide, denoted B, exhibiting a mean number of carbon atoms per nitrogen atom, denoted C_{B}, of from 7.5 to 9.5; a polyamide, denoted C, exhibiting a mean number of carbon atoms per nitrogen atom, denoted C_{C}, of from 10 to 18.

16. The multilayer tubular structure (MLT) according to one of claims 1 to 15, in which the polyamide of the internal layer (2) or of one at least of the other layers (2) is a conductive polyamide.

17. The multilayer tubular structure (MLT) according to one of claims 7 to 16, in which the polyamide of the layer (4) and/or (4') is chosen from the binary blends: PA6 and PA12, PA6 and PA612, PA6 and PA610, PA12 and PA612, PA12 and PA610, PA1010 and PA612, PA1010 and PA610, PA1012 and PA612, PA1012 and PA610, and the ternary blends: PA6, PA610 and PA12; PA6, PA612 and PA12; PA6, PA614 and PA12.

18. The multilayer tubular structure (MLT) according to one of claims 7 to 17, in which at least one of the layers (2), (3), (4) and (4') comprises at least one impact modifier and/or at least one additive.

19. The multilayer tubular structure (MLT) according to one of claims 1 to 18, in which the structure comprises three layers in the following order: (3)//(1)//(2), the layers (3) and/or (2) not containing more than 1.5% by weight of plasticizer, with respect to the total weight of the composition of each layer, in particular the layers (3) and/or (2) being devoid of plasticizer.

20. The multilayer tubular structure (MLT) according to one of claims 4 to 18, in which the structure comprises four layers in the following order: (3')//(3)//(1)//(2), the layer (2) and/or (3) not containing more than 1.5% by weight of plasticizer, with respect to the total weight of the composition of each layer, in particular the layers (3) and/or (2) being devoid of plasticizer.

21. The multilayer tubular structure (MLT) according to one of claims 9 to 18, in which the structure comprises five layers in the following order:
(3')//(3)//(1)//(5)//(2), in which the layer (1) is an EVOH layer, the layer (5) is a PPA layer, the layer (2) not containing more than 1.5% by weight of plasticizer, with respect to the total weight of the composition of each layer; in particular the layer (2) being devoid of plasticizer, the layers (3) and (3') comprising plasticizer; or
(3')//(3)//(1)//(2)//(5), in which the layer (1) is an EVOH layer, the layer (5) is a PPA layer, the layer (2) not containing more than 1.5% by weight of plasticizer, with respect to the total weight of the composition of each layer; in particular, the layer (2) is devoid of plasticizer, the layer (3) and (3') comprising plasticizer; or
(3)//(4')//(1)//(4)//(2), the layer (2) and (4) not containing more than 1.5% by weight of plasticizer, with respect to the total weight of the composition of each layer, in particular, the layer (2) and/or (4) is (are) devoid of plasticizer; the layer (4') comprising plasticizer; in particular, the layer (4') is devoid of plasticizer.

22. The multilayer tubular structure (MLT) according to one of claims 6 to 18, in which the structure comprises the layers in the following order:
(3')//(3)//(4')//(1)//(4)//(2), the layer (2) and (4) not containing more than 1.5% by weight of plasticizer, with respect to the total weight of the composition of each layer, in particular, the layer (2) and/or (4) is (are) devoid of plasticizer; the layer (4') comprising plasticizer.

23. The multilayer structure (MLT) according to one of claims 1 to 22, wherein the multilayer structure comprises a polyamide connector at one and/or the other of its ends, said connector being welded to said structure.

24. The structure according to claim 23, wherein the polyamide of said connector is chosen from PA6, PA66, PA6/66, PA11, PA610, PA612 or PA1012.

25. Use of the multilayer tubular structure (MLT) as defined in one of claims 1 to 24, for the transportation of hydrogen.
